(19) **Europäisches Patentamt / European Patent Office / Office européen des brevets**

(11) **EP 4 412 295 A1**

(12) # EUROPEAN PATENT APPLICATION
published in accordance with Art. 153(4) EPC

(43) Date of publication:
**07.08.2024 Bulletin 2024/32**

(21) Application number: **22885568.0**

(22) Date of filing: **28.09.2022**

(51) International Patent Classification (IPC):
**H04W 24/10** (2009.01) **H04L 1/00** (2006.01)

(52) Cooperative Patent Classification (CPC):
**H04B 15/00; H04L 1/00; H04W 24/10**

(86) International application number:
**PCT/CN2022/122154**

(87) International publication number:
**WO 2023/071683 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.10.2021 CN 202111257784**
**10.12.2021 CN 202111518890**

(71) Applicant: **Huawei Technologies Co., Ltd.**
**Shenzhen, Guangdong 518129 (CN)**

(72) Inventors:
• **QIN, Cheng**
  **Shenzhen, Guangdong 518129 (CN)**
• **WANG, Sihai**
  **Shenzhen, Guangdong 518129 (CN)**
• **YANG, Rui**
  **Shenzhen, Guangdong 518129 (CN)**
• **LI, Xueru**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR FEEDING BACK CHANNEL STATE**

(57) Embodiments of this application provide a channel state feedback method and apparatus. The method includes: A terminal device receives first indication information from a network device. The terminal device reduces a first value of first information to a second value based on the first indication information. The second value is used to determine channel state feedback information. The first information includes channel state indicator CQI information or signal-to-interference-plus-noise ratio SINR information. The channel state feedback information determined based on the second value is more accurate than channel state feedback information determined based on the first value. This can improve accuracy of the channel state feedback information.

Terminal device 120 — Network device 110

S510: Reference signal

S520: Calculate a first value by using a channel eigenvector as a precoding assumption

S530: First indication information

S540: Reduce the first value to a second value based on the first indication information, and generate channel state feedback information based on the second value

S550: Channel state feedback information

S560: Generate resource configuration information based on the channel state feedback information

S570: Resource configuration information

FIG. 5

**Description**

This application claims priority to Chinese Patent Application No. 202111257784.2, filed with the China National Intellectual Property Administration on October 27, 2021 and entitled "AI-BASED CQI FEEDBACK METHOD", which is incorporated herein by reference in its entirety.

This application claims priority to Chinese Patent Application No. 202111518890.1, filed with the China National Intellectual Property Administration on December 10, 2021 and entitled "CHANNEL STATE FEEDBACK METHOD AND APPARATUS", which is incorporated herein by reference in its entirety.

**TECHNICAL FIELD**

Embodiments of this application relate to the communication field, and more specifically, to a channel state feedback method and apparatus.

**BACKGROUND**

In a communication system, a network device (for example, a base station) needs to obtain downlink channel information fed back by a terminal device, to perform processing such as precoding on downlink data. In a current feedback mechanism, a terminal device compresses channel information in spatial domain or frequency domain. For example, the terminal device projects the channel information onto a discrete Fourier transform (discrete Fourier transform, DFT) radix in spatial domain or frequency domain, to describe channel information of an original channel in spatial domain and frequency domain based on a projection result.

However, in this feedback manner, a fixed projection coordinate system is used, and information accuracy is compromised. In addition, as dimensions of spatial domain and frequency domain increase, and a higher accuracy for measurement is required, an amount of required feedback information also increases.

Therefore, a channel state feedback method is urgently needed, to improve accuracy of feedback information.

**SUMMARY**

Embodiments of this application provide a channel state feedback method and apparatus, to improve accuracy of feedback information.

According to a first aspect, a channel state feedback method is provided. The channel state feedback method may be performed by a terminal device, or may be performed by a chip or a circuit disposed in the terminal device. This is not limited in this application. For ease of description, the following uses an example in which the terminal device performs the method.

The channel state feedback method includes:

A terminal device receives first indication information from a network device. The terminal device reduces a first value of first information to a second value based on the first indication information. The second value is used to determine channel state feedback information. The first information includes channel state indicator CQI information or signal-to-interference-plus-noise ratio SINR information.

According to the channel state feedback method provided in embodiments of this application, the terminal device reduces the first value of the CQI information or the SINR information to the second value based on the first indication information. In addition, the channel state feedback information determined based on the second value is more accurate than channel state feedback information determined based on the first value. This improves accuracy of the channel state feedback information.

With reference to the first aspect, in some implementations of the first aspect, the method further includes: The terminal device receives a second probability value from the network device. The second probability value is used to determine whether to reduce the first value of the first information to the second value. That the terminal device determines, based on the first indication information, whether to reduce the first value of the first information to the second value includes that the terminal device determines a first probability value based on the first indication information, and the terminal device determines, based on the first probability value and the second probability value, to reduce the first value of the first information to the second value.

In a possible implementation, the first indication information is reduction indication information delivered by the network device based on a configuration. The reduction indication information indicates the terminal device to calculate the second value based on the first value of the first information.

The terminal device may determine, based on the first probability value and the second probability value, whether to reduce the first value of the CQI information or the SINR information to the second value. In this way, the terminal device does not directly reduce the first value, and accuracy of this solution is improved.

With reference to the first aspect, in some implementations of the first aspect, that the terminal device determines, based on the first probability value and the second probability value, to reduce the first value of the first information to the second value includes: The terminal device determines, based on the first probability value, the second probability value, and a first threshold, to reduce the first value of the first information to the second value.

For example, in this case, the terminal device obtains a plurality of reduction values based on the first indication information, and obtains a plurality of first probability values based on the plurality of reduction values. The terminal device compares the second probability value sent by the network device to the terminal device with each of the first probability values, to obtain a quantity N of first probability values that are greater than or equal to the second probability value. When N is greater than the first threshold, the terminal device determines to perform reduction. When N is less than the first threshold, the terminal device determines not to perform reduction. Alternatively, when N is equal to the first threshold, the terminal device determines to perform or not to perform reduction.

Optionally, the first threshold is predefined, the first threshold is sent by the network device to the terminal device, or the first threshold is determined by the terminal device and the network device through negotiation.

With reference to the first aspect, in some implementations of the first aspect, the first indication information includes at least one of the following information: a reduction value, cosine similarity of an AI model, and a normalized mean square error of the AI model. The reduction value represents a difference between the first value and the second value. The AI model is used to determine the channel state feedback information. The cosine similarity of the AI model and the normalized mean square error of the AI model are used to calculate the reduction value.

Based on the foregoing solution, there are a plurality of possible forms of the first indication information in this application. This improves flexibility of the solution.

With reference to the first aspect, in some implementations of the first aspect, a square of the cosine similarity of the AI model is used to calculate the reduction value.

For example, in this case, the terminal device obtains the first indication information. The first indication information includes the cosine similarity of the AI model. The reduction value obtained through calculation based on the cosine similarity of the AI model by the terminal device is the square of the cosine similarity of the AI model. The terminal device reduces the first value of the first information by the square of the cosine similarity of the AI model, to obtain the second value. The channel state feedback information is generated based on the second value. The terminal device calculates the reduction value based on the square of the cosine similarity of the AI model. Compared with another algorithm, the calculation procedure is simpler. This reduces calculation complexity for the terminal device and ensures accuracy of the reduction value.

With reference to the first aspect, in some implementations of the first aspect, the first information is the CQI information, the first value is a first CQI value, and the second value is a second CQI value. That the terminal device reduces a first value of first information to a second value based on the first indication information includes: The terminal device determines the first CQI value based on a first SINR value, where the first SINR value is determined based on a channel eigenvector, and the channel eigenvector indicates information about a downlink channel. The terminal device reduces the first CQI value of the CQI information to the second CQI value based on the first indication information.

With reference to the first aspect, in some implementations of the first aspect, the first information is the SINR information, the first value is a first SINR value, and the second value is a second SINR value. That the terminal device reduces a first value of first information to a second value based on the first indication information includes: The terminal device reduces the first SINR value of the SINR information to the second SINR value based on the first indication information. After the terminal device reduces a first value of first information to a second value based on the first indication information, the method further includes: The terminal device determines a second CQI value based on the second SINR value.

With reference to the first aspect, in some implementations of the first aspect, the first information is the SINR information, the first value is a first SINR value, and the second value is a second SINR value. That the terminal device reduces a first value of first information to a second value based on the first indication information includes: The terminal device reduces the first SINR value of the SINR information to the second SINR value based on the first indication information. After the terminal device reduces a first value of first information to a second value based on the first indication information, the method further includes: The terminal device quantizes the second SINR value based on second indication information to generate a third SINR value. The second indication information is from the network device, and the second indication information indicates a quantization manner of the SINR information. The terminal device determines the channel state feedback information based on the third SINR value.

The terminal device directly sends the third SINR value, to avoid information loss in a procedure of mapping the SINR value to the CQI value. This can enable the network device to obtain a more accurate channel interference status and improves accuracy of resource configuration information delivered by the network device to the terminal device. The resource configuration information may be information about a modulation and coding scheme with which the terminal device performs data transmission through the downlink channel, or may be time-frequency resource allocation information of the terminal device, precoding information of the terminal device, or the like. A type of the resource configuration information is not limited in this application.

With reference to the first aspect, in some implementations of the first aspect, the second indication information further includes at least one of the following: a quantity of quantization bits, a quantization range, or a quantization step.

With reference to the first aspect, in some implementations of the first aspect, the method further includes: The terminal device receives a channel state information reference signal CSI-RS from the network device. The terminal device determines the channel eigenvector based on the CSI-RS.

With reference to the first aspect, in some implementations of the first aspect, after the terminal device reduces a first value of first information to a second value based on the first indication information, the method further includes: The terminal device determines the channel state feedback information based on the second value. The terminal device sends the channel state feedback information to the network device.

With reference to the first aspect, in some implementations of the first aspect, the first indication information is carried in radio resource control (radio resource control, RRC) configuration information.

Optionally, the first indication information may be further carried in higher layer signaling configuration information (for example, non-access stratum (NAS) signaling information) or configured by using an application layer protocol.

According to a second aspect, a channel state feedback method is provided. The channel state feedback method may be performed by a network device, or may be performed by a chip or a circuit disposed in the network device. This is not limited in this application. For ease of description, the following uses an example in which a network device performs the method.

The channel state feedback method includes:

A network device determines first indication information. The first indication information indicates a terminal device to reduce a first value of first information to a second value. The network device sends the first indication information to the terminal device. The second value is used to determine channel state feedback information. The first information includes channel state indicator CQI information or signal-to-interference-plus-noise ratio SINR information.

According to the channel state feedback method provided in embodiments of this application, the network device determines the first indication information and sends the first indication information to the terminal device. The first indication information indicates the terminal device to reduce the first value of the CQI information or the SINR information to the second value. The channel state feedback information determined based on the second value is more accurate than channel state feedback information determined based on the first value. This can improve accuracy of the channel state feedback information.

With reference to the second aspect, in some implementations of the second aspect, the method further includes: The network device sends a second probability value to the terminal device. The second probability value is used to determine whether to reduce the first value of the first information to the second value.

In this application, the first probability value and the second probability value may be used to determine whether to reduce the first value of the CQI information or the SINR information to the second value. In this way, the terminal device does not directly reduce the first value, and accuracy of this solution is improved.

With reference to the second aspect, in some implementations of the second aspect, the first indication information further includes at least one of the following information: a reduction value, cosine similarity of an AI model, and a normalized mean square error of the AI model. The reduction value represents a difference between the first value and the second value. The AI model is used to determine the channel state feedback information. The cosine similarity of the AI model and the normalized mean square error of the AI model are used to calculate the reduction value.

Based on the foregoing solution, there are a plurality of possible forms of the first indication information in this application. This improves flexibility of the solution.

With reference to the second aspect, in some implementations of the second aspect, a square of the cosine similarity of the AI model is used to calculate the reduction value.

With reference to the second aspect, in some implementations of the second aspect, the first information is the CQI information, the first value is a first CQI value, and the second value is a second CQI value. The first CQI value is obtained based on a first SINR value, and the second CQI is used to determine the channel state feedback information. The first SINR value is determined based on a channel eigenvector, and the channel eigenvector indicates information about a downlink channel.

With reference to the second aspect, in some implementations of the second aspect, the first information is the SINR information, the first value is a first SINR value, and the second value is a second SINR value. That the first indication information indicates a terminal device to reduce a first value of first information to a second value includes: The first indication information indicates to reduce the first SINR value of the SINR information to the second SINR value. The second SINR value is used to determine a second CQI value, and the second CQI value is used to determine the channel state feedback information.

With reference to the second aspect, in some implementations of the second aspect, the first information is the SINR information, the first value is a first SINR value, and the second value is a second SINR value. That the first indication information indicates a terminal device to reduce a first value of first information to a second value includes:

The first indication information indicates to reduce the first SINR value of the SINR information to the second SINR value. The method further includes: The network device sends second indication information to the terminal device. The second indication information indicates a quantization manner of the SINR information.

It should be understood that the network device sends the second indication information to indicate the quantization manner of the SINR information. The terminal device directly quantizes the second SINR value to obtain a third SINR value, and sends the third SINR value to the network device. The network device receives the third SINR value, to avoid information loss in a procedure of mapping the SINR value to the CQI value. This can enable the network device to obtain a more accurate channel interference status and improves accuracy of resource configuration information delivered by the network device to the terminal device.

With reference to the second aspect, in some implementations of the second aspect, the second indication information further includes at least one of the following: a quantity of quantization bits, a quantization range, or a quantization step.

With reference to the second aspect, in some implementations of the second aspect, the method further includes: The network device sends a reference signal CSI-RS to the terminal device. The CSI-RS is used to determine the channel eigenvector.

With reference to the second aspect, in some implementations of the second aspect, the first indication information is carried in RRC configuration information.

According to a third aspect, a channel state feedback apparatus is provided. The channel state feedback apparatus includes: a transceiver unit, configured to receive first indication information from a network device; and a processing unit, configured to reduce a first value of first information to a second value based on the first indication information. The second value is used to determine channel state feedback information. The first information includes channel state indicator CQI information or signal-to-interference-plus-noise ratio SINR information.

With reference to the third aspect, in some implementations of the third aspect, the transceiver unit is further configured to receive a second probability value from the network device. The second probability value is used to determine whether to reduce the first value of the first information to the second value. That the processing unit is further configured to determine, based on the first indication information, whether to reduce the first value of the first information to the second value includes: The processing unit determines the first probability value based on the first indication information. The processing unit determines to reduce the first value of the first information to the second value based on the first probability value and the second probability value.

With reference to the third aspect, in some implementations of the third aspect, the transceiver unit is configured to receive the first indication information from the network device. The first indication information includes a first threshold, and the first threshold is used to determine whether to reduce the first value of the first information to the second value.

With reference to the third aspect, in some implementations of the third aspect, the first indication information further includes at least one of the following information: a reduction value, cosine similarity of an AI model, and a normalized mean square error of the AI model. The reduction value represents a difference between the first value and the second value. The AI model is used to determine the channel state feedback information. The cosine similarity of the AI model and the normalized mean square error of the AI model are used to calculate the reduction value.

With reference to the third aspect, in some implementations of the third aspect, a square of the cosine similarity of the AI model is used to calculate the reduction value.

With reference to the third aspect, in some implementations of the third aspect, when the first information is the CQI information, the first value is a first CQI value, and the second value is a second CQI value, reduce, by the processing unit, a first value of first information to a second value based on the first indication information includes: The processing unit determines the first CQI value based on a first SINR value, where the first SINR value is determined based on a channel eigenvector, and the channel eigenvector indicates information about a downlink channel. The processing unit reduces the first CQI value of the CQI information to the second CQI value based on the first indication information.

With reference to the third aspect, in some implementations of the third aspect, when the first information is the SINR information, the first value is a first SINR value, and the second value is a second SINR value, reduce, by the processing unit, a first value of first information to a second value based on the first indication information includes: The processing unit reduces the first SINR value of the SINR information to the second SINR value based on the first indication information. After the processing unit reduces a first value of first information to a second value based on the first indication information, the method further includes: The processing unit determines a second CQI value based on the second SINR value.

With reference to the third aspect, in some implementations of the third aspect, when the first information is the SINR information, the first value is a first SINR value, and the second value is a second SINR value, reduce, by the processing unit, a first value of first information to a second value based on the first indication information includes: The processing unit reduces the first SINR value of the SINR information to the second SINR value based on the first indication information. After the processing unit reduces a first value of first information to a second value based on the first indication information, the method further includes: The processing unit quantizes the second SINR value based on second indication information to generate a third SINR value. The second indication information is from the network device, and the second indication information indicates a quantization manner of the SINR information. The processing unit determines the channel state feedback information based on the third SINR value.

With reference to the third aspect, in some implementations of the third aspect, the second indication information further includes at least one of the following: a quantity of quantization bits, a quantization range, or a quantization step.

With reference to the third aspect, in some implementations of the third aspect, the transceiver unit is further configured to receive, by the processing unit, a channel state information reference signal CSI-RS from the network device.

With reference to the third aspect, in some implementations of the third aspect, the processing unit is further configured to determine, by the processing unit, the channel state feedback information based on the second value. The transceiver unit is further configured to send, by the processing unit, the channel state feedback information to the network device.

With reference to the third aspect, in some implementations of the third aspect, the first indication information is carried in RRC configuration information.

According to a fourth aspect, a channel state feedback apparatus is provided. The channel state feedback apparatus includes: a processing unit, configured to determine first indication information. The first indication information indicates to reduce a first value of first information to a second value; and a transceiver unit, configured to send the first indication information to a terminal device.

The second value is used to determine channel state feedback information. The first information includes channel state indicator CQI information or signal-to-interference-plus-noise ratio SINR information.

With reference to the fourth aspect, in some implementations of the fourth aspect, the processing unit is configured to determine the first indication information. The first indication information includes a first threshold, and the first threshold is used to determine whether to reduce the first value of the first information to the second value.

With reference to the fourth aspect, in some implementations of the fourth aspect, the first indication information further includes at least one of the following information: a reduction value, cosine similarity of an AI model, and a normalized mean square error of the AI model. The reduction value represents a difference between the first value and the second value. The AI model is used to determine the channel state feedback information. The cosine similarity of the AI model and the normalized mean square error of the AI model are used to calculate the reduction value.

With reference to the fourth aspect, in some implementations of the fourth aspect, a square of the cosine similarity of the AI model is used to calculate the reduction value.

With reference to the fourth aspect, in some implementations of the fourth aspect, the first information is the CQI information, the first value is a first CQI value, and the second value is a second CQI value. The first CQI value is obtained based on a first SINR value, and the second CQI is used to determine the channel state feedback information. The first SINR value is determined based on a channel eigenvector, and the channel eigenvector indicates information about a downlink channel.

With reference to the fourth aspect, in some implementations of the fourth aspect, the first information is the SINR information, the first value is a first SINR value, and the second value is a second SINR value. That the first indication information indicates a terminal device to reduce a first value of first information to a second value includes: The first indication information indicates to reduce the first SINR value of the SINR information to the second SINR value. The second SINR value is used to determine a second CQI value, and the second CQI value is used to determine the channel state feedback information.

With reference to the fourth aspect, in some implementations of the fourth aspect, the first information is the SINR information, the first value is a first SINR value, and the second value is a second SINR value. That the first indication information indicates a terminal device to reduce a first value of first information to a second value includes: The first indication information indicates to reduce the first SINR value of the SINR information to the second SINR value. The transceiver unit is further configured to send second indication information to the terminal device. The second indication information indicates a quantization manner of the SINR information.

With reference to the fourth aspect, in some implementations of the fourth aspect, the second indication information further includes at least one of the following: a quantity of quantization bits, a quantization range, or a quantization step.

With reference to the fourth aspect, in some implementations of the fourth aspect, the transceiver unit is further configured to send a channel state information reference signal CSI-RS to the terminal device. The CSI-RS is used to determine the channel eigenvector, and the channel eigenvector indicates information about a downlink channel.

According to a fifth aspect, a communication apparatus is provided. The communication apparatus includes a processor. The processor is coupled to a memory. The memory is configured to store a program or instructions. When the program or the instructions are executed by the processor, the communication apparatus is enabled to perform the method according to the first aspect, the second aspect, and the possible implementations of the first aspect and the second aspect.

Optionally, there are one or more processors, and there are one or more memories.

Optionally, the memory may be integrated with the processor, or the memory may be disposed separately from the processor.

Optionally, the communication apparatus further includes a transmitter (transmitter) and a receiver (receiver).

According to a sixth aspect, a communication system is provided. The communication system includes the terminal device and the network device.

According to a seventh aspect, a computer-readable medium is provided. The computer-readable medium stores a computer program (this may also be referred to as code or instructions). When the computer program is run, a computer is enabled to perform the method according to any one of the first aspect, the second aspect, or possible implementations of the first aspect and the second aspect.

According to an eighth aspect, a chip system is provided. The chip system includes a memory and a processor. The memory is configured to store a computer program. The processor is configured to store the computer program. The processor is configured to invoke the computer program from the memory and run the computer program, to enable a communication device on which the chip system is installed to perform the method according to any one of the first aspect, the second aspect, or possible implementations of the first aspect and the second aspect.

The chip system may include an input chip or interface configured to send information or data, and an output chip or interface configured to receive information or data.

**BRIEF DESCRIPTION OF DRAWINGS**

FIG. 1 is a schematic diagram of a communication system to which this application is applicable;

FIG. 2 is a schematic flowchart of a channel state feedback method according to an embodiment of this application;

FIG. 3 is a schematic diagram of an AI-based CSI feedback procedure according to an embodiment of this application;

FIG. 4 is a schematic flowchart of another channel state feedback method according to an embodiment of this application;

FIG. 5 is a schematic flowchart of another channel state feedback method according to an embodiment of this application;

FIG. 6 is a schematic flowchart of another channel state feedback method according to an embodiment of this application;

FIG. 7 is a schematic flowchart of another channel state feedback method according to an embodiment of this application;

FIG. 8 is a schematic flowchart of another channel state feedback method according to an embodiment of this application;

FIG. 9 is a schematic diagram of a channel state feedback apparatus 900 according to an embodiment of this application; and

FIG. 10 is a schematic diagram of a channel state feedback apparatus 1000 according to this application.

**DESCRIPTION OF EMBODIMENTS**

The following describes technical solutions of embodiments in this application with reference to accompanying drawings.

The technical solutions in embodiments of this application may be used in various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system, or a new radio (new radio, NR) system.

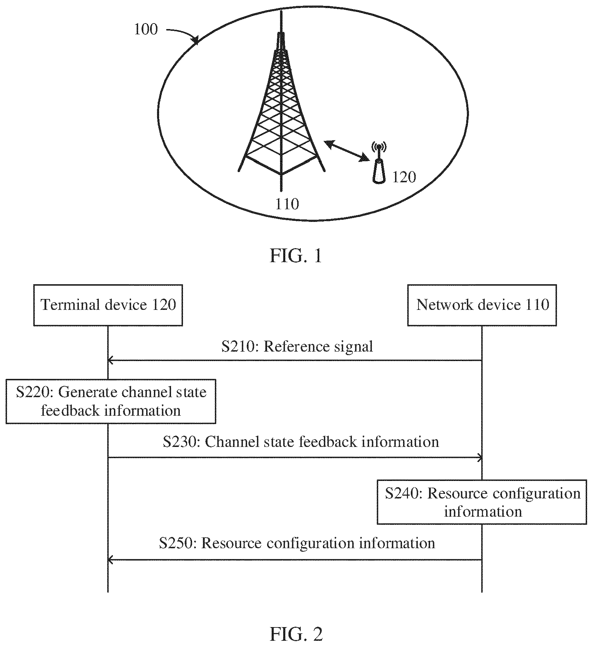

For ease of understanding of embodiments of this application, the following first uses a communication system shown in FIG. 1 as an example to describe in detail a communication system applicable to embodiments of this application. FIG. 1 is a schematic diagram of a communication system 100 applicable to a channel state feedback method according to an embodiment of this application. As shown in FIG. 1, the communication system 100 may include at least one terminal device, for example, a terminal device 120 shown in FIG. 1. A network device 110 and the terminal device 120 may communicate with each other through a radio link. A plurality of antennas may be provided for each communication device, for example, the network device 110 or the terminal device 120. For each communication device in the communication system 100, the provided plurality of antennas may include at least one transmit antenna for transmitting a signal and at least one receive antenna for receiving a signal. Therefore, in the communication system 100, communication devices, for example, the network device 110 and the terminal device 120, may communicate with each other by using a multi-antenna technology.

It should be understood that FIG. 1 merely shows a scenario to which the channel state feedback method provided in this application is applicable, to help understand embodiments of this application, and does not constitute any limitation on the protection scope of this application. The communication system 100 may further include another network device or may further include another terminal device, which is not shown in FIG. 1. The channel state feedback method provided in this application is also applicable to another scenario, for example, a cellular system. A scenario to which this application is applicable is not described herein.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN). A specific form of the terminal device is not limited in embodiments of this application.

It should be understood that in embodiments of this application, the terminal device may be an apparatus configured to implement a function of the terminal device, or may be an apparatus that can support the terminal device to implement the function, for example, a chip system. The apparatus may be mounted in the terminal. In embodiments of this application, the chip system may include a chip, or may include a chip and another discrete component.

The network device in embodiments of this application may be a device configured to communicate with the terminal device. The network device may be a network device (base transceiver station, BTS) in a global system for mobile communications (global system for mobile communications, GSM) system or a code division multiple access (code division multiple access, CDMA) system, a network device (NodeB, NB) in a wideband code division multiple access (wideband code division multiple access, WCDMA) system, an evolved network device (evolved NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

It should be understood that in embodiments of this application, the network device may be an apparatus configured to implement a function of the network device, or may be an apparatus that can support the network device to implement the function, for example, a chip system. The apparatus may be mounted in the network device.

It should be further understood that a specific structure of an execution body of a method provided in the embodiments of this application is not specifically limited in the embodiments shown below, provided that a program that records code of the method provided in the embodiments of this application can be run to perform communication according to the method provided in the embodiments of this application. For example, the method provided in the embodiments of this application may be performed by a terminal device or a network device, or a functional module that is in the terminal device or the network device and that can invoke and execute the program.

Without loss of generality, the following uses interaction between the network device and the terminal device as an example to describe in detail the channel state feedback method provided in embodiments of this application.

For ease of understanding embodiments of this application, several basic concepts in embodiments of this application are briefly described. The following uses a basic concept specified in a protocol of a new radio (new radio, NR) communication system as an example to briefly describe the basic concepts, but embodiments of this application are not limited to being applicable only to an NR system. Therefore, standard names appearing when the NR system is used as an example for description are all used for functional descriptions. The specific names are not limited herein. The specific names indicate only functions of a device, and may be correspondingly extended to another system, for example, a 2nd generation (2nd generation, 2G), 3rd generation (3rd generation, 3G), 4th generation (4th generation, 4G), 5th generation (5th generation, 5G) or future communication system.

1. Precoding technology:

When a channel state is known, a network device may process a to-be-sent signal by using a precoding matrix that matches the channel state, so that a precoded to-be-sent signal adapts to a channel. In this way, a receiver may suppress impact of signals between a plurality of receivers, and a signal-to-interference-plus-noise ratio of a received signal is maximized. Therefore, the to-be-sent signal is precoded, to improve quality (for example, a signal-to-interference-plus-noise ratio (signal-to-interference-plus-noise ratio, SINR)) of the received signal. Therefore, transmission between a sending device and the plurality of receivers can be performed on a same time-frequency resource by using the precoding technology, in other words, MU-MIMO is implemented.

It should be understood that related descriptions of the precoding technology in this application are merely examples for ease of understanding, and are not intended to limit the protection scope of embodiments of this application. In a specific implementation process, the sending device may alternatively perform precoding in another manner. For example, when channel information (for example, but not limited to a channel matrix) cannot be obtained, precoding is performed by using a preset precoding matrix or by using weighted processing. For brevity, specific content of the precoding technology is not described in this application.

2. Channel reciprocity:

In a time division duplexing (time division duplexing, TDD) mode, on uplink and downlink channels, signals are transmitted on a same frequency domain resource and different time domain resources. Within a short period of time (for example, coherence time of channel propagation), it may be considered that channels through which signals on the uplink and downlink channels pass are the same, and the uplink and downlink channels may be obtained equivalently. This is reciprocity between the uplink and downlink channels. Based on the reciprocity between the uplink and downlink channels, the network device may measure the uplink channel based on an uplink reference signal, for example, a sounding reference signal (sounding reference signal, SRS). In addition, the downlink channel may be estimated based on the uplink channel, so that a precoding matrix used for downlink transmission can be determined.

However, in a frequency division duplex (frequency division duplex, FDD) mode, because a frequency band interval between the uplink and downlink channels is far greater than a coherence bandwidth, and the uplink and downlink channels do not have complete reciprocity, the precoding matrix that is used for downlink transmission and that is determined based on the uplink channel may not adapt to the downlink channel. In an FDD system, the network device may perform downlink precoding based on channel state information (channel state information, CSI) fed back by the terminal device to the network device. Specifically, a flowchart of a basic procedure in which a network device and a terminal device performs CSI feedback is shown in FIG. 2.

FIG. 2 is a schematic flowchart of a channel state feedback method according to this application. The feedback procedure includes: S210: A network device sends a reference signal to a terminal device, or a terminal device receives a reference signal from a network device. For specific descriptions of the reference signal, refer to the following related descriptions. The terminal device receives the reference signal, and can perform channel measurement based on the reference signal, to obtain final channel state feedback information through calculation. The channel state feedback information includes CSI of a downlink channel. In other words, the method procedure shown in FIG. 2 further includes S220: The terminal device generates the channel state feedback information based on the received reference signal. Specifically, the terminal device further needs to send the channel state feedback information to the network device. In other words, the method procedure shown in FIG. 2 further includes S230: The terminal device sends the obtained channel state feedback information to the network device.

Optionally, in S240 of the method procedure shown in FIG. 2, after learning the channel state feedback information, the network device can send resource configuration information to the terminal device based on the channel state feedback information.

Optionally, the method shown in FIG. 2 further includes S250: The network device sends the resource configuration information to the terminal device based on first indication information. The resource configuration information includes a modulation and coding scheme (modulation and coding scheme, MCS). The modulation and coding scheme (modulation and coding scheme, MCS) indicates a corresponding modulation and coding scheme with which the terminal device performs data transmission through a downlink channel.

Specifically, the network device determines, based on a channel rank indicator (rank indicator, RI) fed back by the terminal device, a quantity of flows for transmitting the data to the terminal device. The network device determines, based on a channel state indicator (channel quality indicator, CQI) fed back by the terminal device, a modulation order and a channel coding rate for transmitting the data to the terminal device. The network device determines, based on a precoding matrix indicator (precoding matrix indicator, PMI) fed back by the terminal device, precoding for transmitting the data to the terminal device.

3. Reference signal (reference signal, RS):

The RS may also be referred to as a pilot (pilot), a reference sequence, or the like. In embodiments of this application, the reference signal may be a reference signal for channel measurement. For example, the reference signal may be a channel state information reference signal (channel state information reference signal, CSI-RS) used for downlink channel measurement, or may be a sounding reference signal (sounding reference signal, SRS) used for uplink channel measurement. It should be understood that the foregoing listed reference signals are merely examples, and should not constitute any limitation on this application. This application does not exclude a possibility of defining another reference signal in a future protocol to implement a same or similar function.

4. Precoding matrix indicator (precoding matrix indicator, PMI):

The PMI may indicate a precoding matrix. The precoding matrix may be, for example, a precoding matrix determined by the terminal device based on a channel matrix of each frequency-domain element. Alternatively, the matrix may be a precoding matrix that is in a predefined codebook and that is closest to the precoding matrix determined based on the channel matrix. The precoding matrix may be determined by the terminal device through channel estimation or the like or based on channel reciprocity. However, it should be understood that a specific method of determining the precoding matrix by the terminal device is not limited to the foregoing description. For specific implementations, refer to conventional technologies. For brevity, implementations are not enumerated herein.

For example, the precoding matrix may be obtained by performing singular value decomposition (singular value decomposition, SVD) on the channel matrix or a covariance matrix of the channel matrix, or may be obtained by performing eigenvalue decomposition (eigenvalue decomposition, EVD) on the covariance matrix of the channel matrix. It should be understood that the foregoing listed manners of determining the precoding matrix are merely examples, and should not constitute any limitation on this application. For a manner of determining the precoding matrix, refer to conventional technologies. For brevity, the precoding matrix is not listed one by one herein.

The precoding matrix determined by the terminal device may be referred to as a to-be-fed precoding matrix, or a to-be-reported precoding matrix. The terminal device may indicate the to-be-fed-back precoding matrix through the PMI, so that the network device restores the precoding matrix based on the PMI. The precoding matrix recovered by the network device based on the PMI may be the same as or similar to the to-be-fed-back precoding matrix.

A higher degree of approximation between the precoding matrix determined by the network device based on the PMI and the precoding matrix determined by the terminal device in downlink channel measurement indicates that the precoding matrix that is used for data transmission and that is determined by the network device is more capable of adapting to the downlink channel. Therefore, signal transmission quality can be improved.

It should be understood that the PMI is merely a name, and should not constitute any limitation on this application. This application does not exclude a possibility of defining signaling with other names in a future protocol for a same or similar function.

It should be noted that according to the method provided in the embodiments of this application, the network device may determine, based on feedback of the terminal device, a precoding matrix corresponding to one or more frequency domain units. The precoding matrix determined by the network device may be directly used for downlink data transmission. Some beamforming methods, including, for example, zero-forcing (zero-forcing, ZF), regularized zero-forcing (regularized zero-forcing, RZF), minimum mean-squared error (minimum mean-squared error, MMSE), and maximum signal-to-leakage-and-noise (signal-to-leakage-and-noise, SLNR), may also be used to obtain a precoding matrix finally used for downlink data transmission. This is not limited in this application. Unless specifically described, all precoding matrices below may be precoding matrices determined based on the method provided in this application.

5. Modulation and coding scheme (modulation and coding scheme, MCS):

Rates in LTE and NR are configured based on MCS indexes. An MCS is a rate table in which concerned factors affecting a communication rate are used as a column of the table, and MCS indexes are used as a row. Therefore, each MCS index actually corresponds to a physical transmission rate in a group of parameters. CSI is channel state information, and is a type of information fed back by a terminal device to a network device. CSI mainly includes three parts: a CQI, an RI, and a PMI. The CQI is feedback information sent by the terminal device to the network device through a downlink channel. Currently, there are 15 CQI values in total as specified in the specification. The value is represented in 4 bits. Each CQI corresponds to a different modulation scheme and a different code rate, as shown in table 1.

**Table 1**

| CQI index (CQI index) | Modulation (Modulation) scheme | Code rate x 1024 | Efficiency |
|---|---|---|---|
| 0 | out of range | | |
| 1 | QPSK | 78 | 0.1523 |
| 2 | QPSK | 120 | 0.2344 |

(continued)

| CQI index (CQI index) | Modulation (Modulation) scheme | Code rate x 1024 | Efficiency |
|---|---|---|---|
| 3 | QPSK | 193 | 0.3770 |
| ... | ... | ... | ... |
| 14 | 64QAM | 873 | 5.1152 |
| 15 | 64QAM | 948 | 5.5547 |

A CQI is generally determined based on a value of a signal-to-interference-plus-noise ratio (signal-to-interference-plus-noise ratio, SINR). A terminal device obtains channel measurement information and interference information by measuring a resource related to downlink CSI measurement, to further obtain an SINR through calculation. Based on the SINR, the terminal device may determine, by searching an SINR-BLER table stored in the terminal device, a CQI level that needs to be reported. An important piece of information for determining the CQI is the SINR value. Calculation of the SINR value is related to channel quality, interference information, noise power, and a receive algorithm of the terminal device. In addition, in multiple-input multiple-output (multiple-input-multiple-output, MIMO), the SINR value is further related to precoding by the network device. If the precoding by the network device can match a channel (for example, an amplitude obtained after a channel matrix is multiplied by a precoding matrix is large), an SINR value received by the terminal device can be increased. Therefore, when the SINR value is calculated, it is necessary to determine a to-be-used precoding assumption.

In NR, precoding assumptions in different CSI feedback manners are specified in the specification. In other words, different methods for determining a precoding matrix W are defined in the specification. For a procedure of calculating a CQI by a terminal device, a matrix calculation formula is used as an example:

$$\begin{bmatrix} y^{(3000)}(i) \\ ... \\ y^{(3000+p-1)}(i) \end{bmatrix} = W(i) \begin{bmatrix} x^{(0)}(i) \\ ... \\ x^{(v-1)}(i) \end{bmatrix}$$

It may be learned that the formula is used to measure and calculate a channel state, where [$x$] is a reference signal sent by a network device, W(i) is a precoding matrix, and [$y$] is a signal obtained through precoding by the terminal device. When the terminal device does not make a precoding assumption, a precoding matrix W(i) is associated with a PMI. Alternatively, when the terminal device makes a precoding assumption, a precoding matrix W is associated with downlink channel information obtained through measurement by the terminal device.

For example, when CSI feedback content includes wideband PMI information and subband PMI information, in CQI calculation, the precoding assumption is a precoding matrix corresponding to a reported PMI. When the CSI feedback content includes only the wideband PMI information, in CQI calculation, the precoding assumption is obtained by multiplying a wideband precoding matrix by a random subband precoding matrix. When the CSI feedback content does not include PMI information, in CQI calculation, the precoding assumption is an identity matrix. In summary, a to-be-used precoding assumption is predefined. In this assumption, in subsequent data transmission, a precoding matrix used by the network device is the precoding matrix corresponding to the PMI reported by the terminal device. In this case, an SINR value calculated by the terminal device is basically close to an SINR value in subsequent data transmission when a downlink channel and interference do not change greatly.

It should be understood that the network device determines, based on a CQI value reported by the terminal device, an MCS allocated to the terminal device. When the SINR value obtained through calculation when the terminal device reports the CQI is basically close to the SINR value in subsequent transmission, a bit error rate is generally low in the corresponding MCS.

6. Artificial intelligence (artificial intelligence, AI):

Artificial intelligence is sweeping the world. Many words, such as artificial intelligence, machine learning, and deep learning, are lingering around us. This application relates to the deep learning in the AI. The deep learning is a learning process in which a deep neural network is used to represent a feature. A neural network usually includes two phases: training and testing. The training is a process of extracting model parameters from training data by using a neural network model. The testing is to run test data by using a trained model (a neural network model + a model parameter) and view a result. An available framework obtained by uniformly abstracting phase data in a training process is referred to as a training framework. This application mainly relates to application of an AI neural network model in a CQI feedback procedure. An AI neural network architecture is not limited in this application.

7. AI encoder and decoder:

Currently, in research on channel state feedback in a massive MIMO system, to-be-fed-back CSI may be compressed by using the sparsity of a channel in time domain, frequency domain, and spatial domain. The compressed CSI is transmitted to a network device end through a feedback link. The network device side reconstructs an original sparse channel matrix based on a feedback value. In the CSI feedback method, the terminal device performs AI-based encoding (optionally, performing AI-based quantization or non-AI-based quantization) based on architectures of an autoencoder and decoder in an AI network. Generally, a channel after AI encoding is usually a floating-point number, and quantization further needs to be performed.

Optionally, AI-based quantization is performed. In other words, the entire neural network includes three parts: an AI encoder, an AI quantizer, and an AI decoder. The AI quantizer and the AI encoder are sent to the terminal device together. After performing AI quantization, the terminal device sends a quantized bit to the network device. An AI dequantizer (a structure parameter of the AI dequantizer may be the same as that of the AI quantizer, and the AI dequantizer is only used for an operation inverse to that of the AI quantizer) and an AI decoder are disposed on the network device side.

Optionally, non-AI-based quantization, for example, equal-step quantization, is uniform quantization. Uniform quantization is performed for an interval within which an encoded floating-point number falls, and the network device side performs reconstruction based on AI decoding.

It should be understood that a dimension of information input to the encoder is usually inconsistent with a dimension of information output after the information is encoded by the encoder. It may be understood that the encoder compresses the information. In embodiments of this application, a ratio of the dimension of the information output from the encoder to the dimension of the information input to the encoder is referred to as a compression rate of the encoder, a compression percentage of the encoder, compression efficiency of the encoder, or the like. For example, the information input to the encoder is 4-bit information, and the information output from the encoder is 2-bit information. In this case, the compression rate of the encoder is 2/4 = 1/2.

It should be further understood that a dimension of information input to the decoder is usually inconsistent with a dimension of information output after the information is decoded by the decoder. It may be understood that the decoder decompresses the information. In embodiments of this application, a ratio of the dimension of the information input to the decoder to the dimension of the information output from the decoder is referred to as a decompression rate of the decoder, a decompression percentage of the decoder, decompression efficiency of the decoder, or the like. For example, the information input to the decoder is 2-bit information, and the information output from the decoder is 4-bit information. In this case, the decompression rate of the decoder is 2/4 = 1/2.

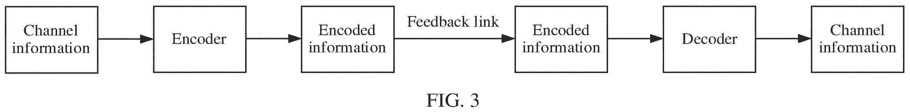

Specifically, FIG. 3 is a schematic diagram of an AI-based CSI feedback procedure according to an embodiment of this application. A network device and a terminal device perform joint training to obtain an encoder and a decoder through training. The encoder is deployed in the terminal device, and the decoder is deployed in the network device. The terminal device obtains downlink channel information through measurement based on a downlink reference signal. The downlink channel information is encoded by the encoder to obtain compressed codeword information that is to be fed back to an air interface. The compressed codeword information is fed back to the network device through a feedback link. After receiving the compressed codeword information, the network device decodes the compressed codeword information by using a locally deployed decoder, to obtain reconstruction information of the channel information fed back by the terminal device. In the AI-based CSI feedback method, the terminal device needs to compress and feed back all channel information. A large amount of information needs to be fed back. If channel information is compressed and transmitted only in an AI-based manner, for example, compressing PMI information, a CQI calculation problem and a precoding assumption problem in a CQI calculation procedure are not considered. In view of this, this application provides a channel state feedback method, to resolve a CQI calculation problem and improve accuracy of feedback information.

8. AI-based CQI feedback:

Specifically, FIG. 3 is a schematic diagram of an AI-based CSI feedback procedure according to an embodiment of this application. In embodiments of this application, a framework including an encoder and a decoder may be referred to as an AI model or an AI architecture. This is not limited.

A network device and a terminal device perform joint training to obtain an encoder and a decoder through training. The encoder compresses and encodes input information into a vector or matrix. The vector or matrix output by the encoder is input to the decoder, to restore the original input. In an AI model/architecture, network structures of the encoder and the decoder are not limited. An AI model, for example, a convolutional neural network (convolutional neural network, CNN) or a fully connected neural network (fully connected neural network) may be used. The AI model used in this application is not described herein.

It should be noted that the encoder is deployed in the terminal device, and the decoder is deployed in the network device. The terminal device obtains downlink channel information through measurement based on a downlink reference signal. The downlink channel information is encoded by the encoder to obtain encoded information. The encoded information is fed back to the network device through a feedback link. After receiving the encoded information, the network device decodes the encoded information by using a locally deployed decoder, to obtain the channel information fed back by the terminal device.

It should be further noted that it is complex to train the encoder and the decoder involved in the AI-based CQI feedback procedure. The encoder and the decoder (optionally, a quantizer and a dequantizer) are generally trained in an offline state, and then, the trained encoder and decoder are used for online encoding and decoding of a channel.

It should be further noted that the encoder mentioned in this application may also include a quantizer, and the decoder may include a dequantizer. This is not limited in this application.

When the terminal device calculates a CQI, generally in a procedure in which a precoding assumption is made based on an eigenvector, there may be loss in a channel eigenvector when the terminal device performs AI encoding on the channel eigenvector. Consequently, a CQI value calculated by the terminal device is large. In addition, a significant error exists in channel feedback information generated by the terminal device. A manner in which the network device determines a matched MCS that is to be allocated to the terminal device is related to the channel feedback information sent by the terminal device. Therefore, when the terminal device reports inaccurate channel feedback information, an MCS allocated by the network device may not match the channel. Consequently, a throughput of the terminal device is low.

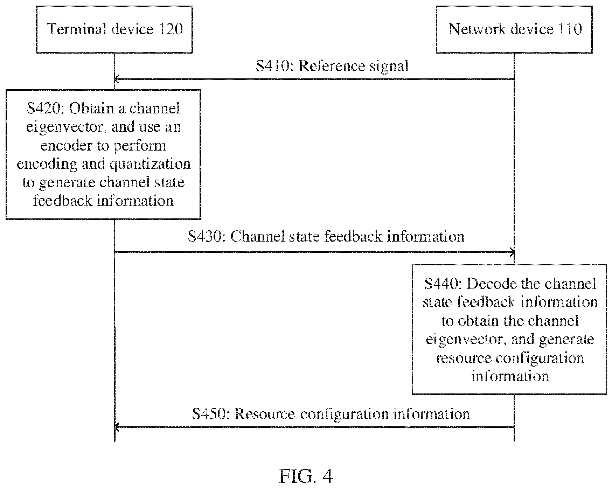

FIG. 4 is a schematic flowchart of a channel state feedback method according to this application. As an example, the method shown in FIG. 4 is a feedback channel state architecture based on an AI model. An encoder and a decoder that are jointly trained by a network device and a terminal device are respectively deployed at a terminal device side and a network device side.

A possible implementation in which the terminal device and the network device determine a required AI model is that the network device is responsible for managing the encoder and the decoder. In other words, the network device has the entire AI model, and sends the encoder in the AI model to the terminal device. A sending manner may be configured through RRC, another piece of higher layer signaling, or an application layer protocol. This is not limited in this application.

The method shown in FIG. 4 may include the following steps.

S410 is included, and S410 is the same as S210. For specific descriptions, refer to the descriptions of S210 in FIG. 2. To avoid repetition, details are not described herein again.

Further, after receiving the reference signal, the terminal device can generate channel state feedback information based on the reference signal. The method procedure shown in FIG. 4 further includes: S420: The terminal device generates the channel state feedback information.

Specifically, the terminal device obtains an eigenvector of a downlink channel based on the received reference signal.

Then, the terminal device encodes the obtained eigenvector of the downlink channel by using an encoder, to obtain an encoded result.

Finally, the encoded result is quantized to generate the channel state feedback information.

For example, the channel information obtained by the terminal device based on the received reference signal is a $Nr \times Nt \times M$ channel matrix, where $Nr$ is a quantity of antennas of the terminal device, $Nt$ is a quantity of antennas of a base station, and $M$ is a quantity of resource blocks (resource blocks, RBs) or a quantity of subcarriers.

The eigenvector obtained by the terminal device based on the obtained channel information is a $R \times Nt \times M$ matrix, where R is a channel rank. The AI encoder performs AI encoding on the matrix $R \times Nt \times M$ as input.

It is assumed that the AI encoder is a fully connected layer. Output of the fully connected layer is a D dimensional vector. After passing through the fully connected layer, the eigenvector may be compressed into a $D$ dimensional vector. Further, the $D$ dimensional vector is input to an AI quantizer. The quantizer includes a $L \times D$ dimensional matrix. For the input $D$ dimensional vector, a vector at a shortest distance (for example, a Euclidean distance) from the input $D$ dimensional vector is found in L vectors. An index of the vector is used as quantized channel state feedback information, and is sent to the network device by the terminal device.

The AI quantizer, the AI encoder, and an AI decoder may be obtained through joint training.

It should be understood that the channel state feedback information is used to feed back a channel state. Channel state feedback may be understood as that the terminal device feeds back a measured channel between the network device and the terminal device.

For ease of understanding, the following uses a specific example to describe how to feed back a channel state.

For example, channel state feedback means feeding back a channel that is to between the network device and the terminal device and that is measured by the terminal device. For example, the network device has 32 antennas, the terminal device has two antennas, and a measurement bandwidth is 100 RBs. When the terminal device measures the reference signal sent by the network device, through channel estimation, a 32×2 channel matrix may be obtained through measurement on each reference signal. Therefore, a size of all measured channels is 32×2×100. Because channels are correlated in frequency domain, a plurality of reference signals may be grouped into one subband in frequency domain, and reported together. For example, a subband size is 4 RBs per subband. Therefore, a final to-be-reported matrix is a 32×2×25 complex matrix. If it is considered that the channels are also correlated in space, channel ranks may be low. For example, a matrix rank may be 1. In this case, only the strongest eigenvector of the matrix needs to be reported on each subband, instead of reporting all channel information. Therefore, to-be-reported channel information is a 32×25 matrix (singular value decomposition/eigenvalue decomposition is performed on each subband to obtain a 32×1 eigenvector). To further reduce overheads, the terminal device maps each eigenvector to a predefined codebook, describes each eigenvector by using a PMI, and reports the eigenvector. However, in an AI-based CSI feedback manner, the eigenvector may be encoded in an AI manner, and the eigenvector is restored by the AI decoder on the network device side.

Optionally, in a CSI reporting configuration delivered by the network device, information such as a configuration ID or reporting content is defined. Content such as reporting PMI and not reporting PMI may be configured based on different CSI reporting configurations. For example, if an RRC information element for AI PMI reporting is added, first, when AI CSI is used for reporting, an AI-related configuration may be added to a report Quantity configuration, to indicate that a PMI is reported by using an AI manner.

After generating the channel state feedback information, the terminal device may send the channel state feedback information to the network device. The method procedure shown in FIG. 4 further includes the following step.

S430: The terminal device sends the channel state feedback information to the network device, or the network device receives the channel state feedback information from the terminal device.

After receiving the channel state feedback information, the network device may determine, based on the channel state feedback information, a resource required by the downlink channel. The method procedure shown in FIG. 4 further includes the following step.

S440: The network device determines the resource required by the downlink channel, and generates resource configuration information.

In a possible implementation, the channel state feedback information includes PMI information, RI information, and CQI information that are generated by the terminal device. The PMI information is information encoded by using the AI encoder in the terminal device.

The channel feedback information includes PMI information, RI information, and CQI information that are reported by the terminal device. The PMI information is information encoded by using the AI encoder in the terminal device.

In this implementation, the channel state feedback information that is sent by the terminal device and that is received by the network device includes the RI information, the CQI information, and the PMI information that is encoded by using the AI encoder in the terminal device. The network device then performs decoding by using the decoder to obtain key information of the downlink channel. The key information of the downlink channel may include precoding information of the downlink channel and/or rank information of the downlink channel, and quality information of the downlink channel.

In another possible implementation, the network device determines to-be-allocated RBs based on CQI information on different frequency band resources, to further determine MCS information on corresponding RBs. In addition, the network device may determine, based on PMI information and RI information on a corresponding RB, precoding and a rank that are to be used for the downlink channel.

The resource required by the downlink channel is used to generate the resource configuration information.

Further, the network device generates the resource configuration information based on the downlink channel information, and sends the resource configuration information to the terminal device. The method procedure shown in FIG. 4 further includes the following step.

S450: The network device sends the resource configuration information to the terminal device, or the terminal device receives the resource configuration information from the network device.

The resource configuration information includes information about an MCS that is to be allocated by the network device to the downlink channel corresponding to the terminal device.

According to the method shown in FIG. 4, the terminal device encodes and quantizes the obtained channel eigenvector by using the encoder, to obtain the channel state feedback information. The terminal device sends the channel state feedback information to the network device. The network device decodes the received channel state feedback information. In the method shown in FIG. 4, the procedure of encoding and decoding the channel state information improves transmission accuracy of the channel state feedback information and improves a degree of matching between an MCS allocated by the network device to the terminal device and the channel.

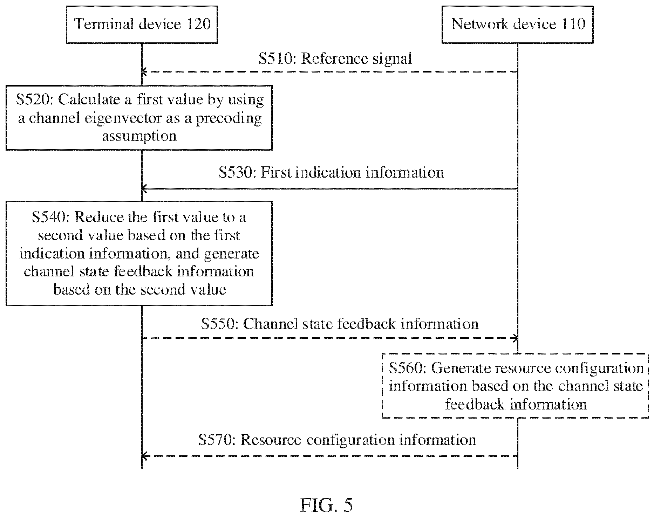

FIG. 5 is a schematic flowchart of a channel state feedback method according to an embodiment of this application. The method may include the following step.

S510: A network device sends a reference signal to a terminal device, or a terminal device receives a reference signal from a network device.

It should be understood that a reference signal may be sent in two manners: a beamformed manner and a non-beamformed manner.

Manner 1: In a non-beamformed manner, the network device does not precode the to-be-sent reference signal. This is equivalent to sending the to-be-sent reference signal in all directions.

Manner 2: In a beamformed manner, the network device precodes the to-be-sent reference signal and sends the precoded to-be-sent reference signal. When the terminal device performs downlink channel measurement based on the received reference signal, precoding information has been superimposed on the measured downlink channel.

It should be further understood that in a scenario in which the reference signal may be sent in the beamformed manner, a transmit end sends reference signals in a compressed sensing-based precoding mode to the terminal device. The compressed sensing-based reference signals are superimposed on a same time-frequency resource for sending. This can save a time-frequency resource. However, a receive end may restore the aliased reference signals by using an iterative algorithm, so as to perform estimation on the entire channel. Because estimated channel information includes precoding when the reference signal is sent in the beamformed manner, the terminal device does not need to make an additional precoding assumption. In other words, the terminal device may use one identity matrix as the precoding assumption.

It should be further understood that step S510 is an optional step. For example, the terminal device performs channel estimation and obtains the channel eigenvector based on a public signal (for example, a synchronization signal) of a cell, without obtaining the channel eigenvector based on the reference signal.

Further, after receiving the reference signal, the terminal device can obtain an eigenvector of a downlink channel based on the reference signal.

It should be understood that the terminal device obtains downlink channel information, namely, CSI, based on reference signal measurement. The CSI mainly includes parameters such as a precoding matrix indicator (PMI), a rank indicator (RI), and a channel quality indicator (CQI), and is used to describe downlink channel information. The PMI is used to describe an eigenvector of a downlink channel. The RI is used to describe a rank of a channel. The CQI is used to describe the overall quality of a channel, and includes a channel interference status in addition to useful signal quality information.

The terminal device obtains a first SINR value through calculation by using the obtained eigenvector of the downlink channel as the precoding assumption. The method procedure shown in FIG. 5 further includes: S520: The terminal device calculates a first value by using the channel eigenvector as the precoding assumption.

Optionally, the terminal device receives the reference signal sent by the network device.

Then, the terminal device obtains the channel eigenvector of the downlink channel based on the reference signal.

Finally, the terminal device calculates the first value of first information by using the obtained eigenvector of the downlink channel as the precoding assumption.

After obtaining the first value, the terminal device calculates a second value based on first indication information sent by the network device. The method procedure shown in FIG. 5 further includes the following steps.

S530: The network device sends first indication information to the terminal device, or the terminal device receives first indication information from the network device.

S540: The terminal device reduces the first value of the first information to the second value based on the first indication information.

The second value is used to determine channel state feedback information. For example, the terminal device may generate the channel state feedback information based on the second value.

That the terminal device reduces the first value of the first information to the second value based on the first indication information may be interpreted as that the terminal device reduces the first information to the second value from the first value based on the first indication information.

Optionally, the first indication information is a reduction value in a channel state feedback configuration sent by the network device. The terminal device uses the channel eigenvector as a precoding assumption and performs calculation to obtain the first value of the first information, and calculates the second value based on the reduction value sent by the network device.

Optionally, the first indication information is AI model information in the channel state feedback configuration sent by the network device. The terminal device further calculates a required reduction value based on a model parameter, and reduces the first value of the first information by the reduction value obtained through calculation to obtain the second value.

Optionally, the first information is CQI information, the first value of the first information is a first CQI value, and a second value is a second CQI value.

Optionally, the first information is SINR information, the first value of the first information is a first SINR value, and a second value is a second SINR value.

As described above, in a possible implementation, the first indication information may be a reduction value directly configured by the network device and sent to the terminal device.

In this implementation, the terminal device receives the reduction value of the first indication information. For example, the network device configures an SINR reduction value as one of {0.5, 1, 1.5, 2}. After receiving the first indication information, when calculating the second SINR value, the terminal device directly calculates the second SINR value based on the first SINR value according to the reduction value of the first indication information. Specifically, code in an RRC information element is as follows.

```
CSI-ReportConfig ::=          SEQ terminal device NCE {
    reportConfigId                  CSI-ReportConfigId,
    reportQuantity                  CHOICE {
        none                            NULL,
        cri-RI-PMI-CQI                  NULL,
        cri-RI-i1                       NULL,
        cri-RI-CQI                      NULL,
        cri-RI-AIPMI-CQI                ENUMERATED {0.5, 1, 1.5, 2}
    },
    ….
}
```

As described above, in another possible implementation, the first indication information is AI model information configured by the network device.

In this implementation, the first indication information that is sent by the network device and that is received by the terminal device is the AI model information. For example, the network device configures the AI model information in a CSI report information element in the code. Alternatively, the AI model information is used as auxiliary information of the AI model and is delivered with the AI model.

Optionally, a manner in which the network device sends the first indication information includes sending the first indication information through RRC signaling configuration, physical layer signaling configuration (for example, downlink control information), application layer protocol configuration, media access control-control element (medium access control-control element, MAC-CE) configuration, or another piece of higher layer signaling configuration. This is not limited in this application.

It should be noted that the AI model information is used to measure a degree of matching between channel information restored by the AI model and original channel information. The AI model information may specifically include information such as cosine similarity of the AI model or a normalized mean square error of the AI model. Content of the AI model information used herein is not limited in this application.

After determining the second value after the fallback, the terminal device can generate channel state feedback information based on the second value. It should be noted that the channel state feedback information is determined based on the second value of the first information.

In a possible implementation, the following uses an example in which the first indication information is the AI model information, and the AI model information includes cosine similarity of an AI model. The cosine similarity is defined as follows:

$$\rho = \left| \frac{W\,\tilde{W}}{\|W\|\,\|\tilde{W}\|} \right|$$

W is an original channel matrix, and $\tilde{W}$ is a restored channel matrix. A value interval of the indicator $\rho$ is [0, 1]. If the value is closer to 1, this indicates that a channel matrix decoded by a network device decoder is closer to the original channel and performance of channel information restoration is better.

Further, the terminal device determines a reduction value based on model performance information in the first indication information sent by the network device.

Specifically, for example, a rank of the channel matrix is 1. When calculating the SINR corresponding to the CQI, the terminal device uses the channel eigenvector as the precoding assumption, and the SINR may be expressed as:

$$SINR_{ideal} = \frac{\left| g^{\dagger} HW \right|^2}{I+n} = \frac{\left| s g^{\dagger} u \right|^2}{I+n}$$

$g$ is a receive vector used by the terminal device, $W$ is the channel eigenvector, and $I + n$ represents interference and noise power that are multiplied by the receive vector. Further, SVD is performed on $H$, where $H = USV$. Alternatively, eigenvalue decomposition is performed on $HH'$, where $HH' = USU'$. $H'$ is a conjugate matrix of $H$. $S$ is the maximum singular value/eigenvalue of the matrix $H$, and $U$ is the left eigenvector of the matrix $H$.

Then, the network device restores a channel eigenvector $W$ obtained through AI encoding, and uses the eigenvector as a subsequent precoding vector. It is assumed that interference and noise in the channel do not change within a short period of time. The SINR received by the terminal device may be expressed as:

$$SINR_{ideal} = \frac{\left| g^{\dagger} HW \right|^2}{I+n} = \frac{\left| g^{\dagger} usw^{\dagger} \tilde{w} \right|^2}{I+n} = \frac{\rho^2 \left| s g^{\dagger} u \right|^2}{I+n}$$

$\tilde{w}$ is an eigenvector restored by the AI encoder. According to the definition of the cosine similarity, when a modulus value of the eigenvector is 1, a rightmost equation may be further obtained.

Optionally, it can be learned from the formula that compared with the first value calculated by the terminal device, the second value of the channel state information actually received by the network device has loss equal to a square of the cosine similarity. Therefore, $\rho^2$ in the formula may be used as a reduction value for calculating the downlink channel CQI. In other words, after obtaining the first value through calculation, the terminal device multiplies the first value by a corresponding reduction value $\rho^2$. The terminal device determines a new SINR value of the downlink channel, and performs mapping to obtain a new CQI value, namely, the second value.

When Rank > 1, a corresponding formula may also be obtained similarly. For example, the reduction value is expressed as follows:

$$u_i = \frac{(\sum_j a_{ij} s_j \rho_{ji})^2}{[(\sum_{k \neq i} \sum_j a_{ij} s_j \rho_{kj})^2 - \sum_{k \neq i} a_{ik}^2 s_k^2] SINR_i^{ideal} + a_{ii}^2 s_i^2}$$

$\rho_{ji}$ is cosine similarity, $a_{ij}$ is an element in a matrix obtained by multiplying a receive matrix and a channel left eigenvector, and $S$ is a channel eigenvector. $SINR_i^{ideal}$ is a SINR value calculated by the terminal device by making a precoding assumption based on the eigenvector of the channel. The cosine similarity $\rho_{ji}$ may form a symmetric matrix, indicating cosine similarity between a restored channel eigenvector i and an actual channel eigenvector j.

In another possible implementation, cosine similarity in an example of embodiments of this application may also be the statistical mean, for example, the mean of the cosine similarity of the AI model. In actual application, AI model performance of the AI model varies based on different pieces of test data. Therefore, the cosine similarity of the AI model presents a probability distribution feature. When a variance of probability distribution density is small, it is appropriate to use the statistical mean to express cosine similarity performance.

However, when a variance of probability distribution density is large, the statistical mean is used only to determine the reduction value. Consequently, the reduction value calculated by the terminal device may be very small. For example, when cosine similarity restored by the AI model is mu-sigma, which is less than the statistical mean mu, the reduction value calculated by the terminal device based on a model parameter is small. Consequently, the CQI value reported by the terminal device may still be very large.

In another possible implementation, embodiments of this application proposes to indicate a distribution feature of AI model performance. The following two indication manners are used as an example: The terminal device uses a plurality of samples in probability distribution, for example, cosine similarity corresponding to locations such as mu, mu-sigma, and mu-2sigma. The network device directly indicates to the terminal device information such as a distribution type, the mean, and/or a variance.

It should be understood that in an ideal case, the cosine similarity matrix is an identity matrix. The restored eigenvector is consistent with the actual eigenvector.

It should be further understood that in a manner in which the network device uses the first indication information including the AI model configuration, the network device, in different ranks, configures information about the cosine similarity of the AI model in the first indication information and sends the first indication information to the terminal device. After the terminal device receives the first indication information sent by the network device, the terminal device calculates the reduction value based on cosine similarity of the AI model in different rank values in the first indication information. The terminal device reduces the first value of the first information to the second value based on the reduction value obtained through calculation. The terminal device then sends the channel state feedback information generated based on the second value to the network device.

This application provides two implementations for CQI reduction. There is another manner of determining a CQI value. This is not limited in this application.

Manner 1: The terminal device directly reduces an SINR value, and the terminal device performs mapping again based on a reduced SINR value to determine a corresponding CQI, namely, the second CQI. For example, the first information is SINR information, the first value is a first SINR value, and the second value is a second SINR value. The terminal device reduces the first SINR to the second SINR based on the first indication information, and the terminal device maps the second SINR value to the second CQI.

Manner 2: The terminal device first maps an original SINR value obtained through calculation to an original CQI, namely, the first CQI. The terminal device obtains a new CQI, namely, the second CQI, after decreasing the first CQI by several levels based on the first CQI and the first indication information. For example, the first information is CQI information, the first value is the first CQI value, and the second value is the second CQI value. The terminal device determines the first CQI value based on the first SINR value. The first SINR value is determined by the terminal device based on a channel eigenvector. The terminal device reduces the first CQI to the second CQI based on the first indication information.

In a possible implementation, the terminal device calculates the SINR value, maps the SINR value to a to-be-reported CQI value, and determines whether a CQI mismatch may occur. A reduction value threshold for the CQI level obtained through calculation may be obtained based on the reduction value calculation manner. The threshold is calculated according to (CQI threshold + reduction value). Therefore, a reduction range for each CQI level may be obtained based on the threshold obtained through calculation. For example, when the SINR value obtained through calculation falls within the reduction range, this indicates that after the SINR value is reduced (for example, an actual CQI level is 2), the SINR value is very likely to fall within an SINR range of another CQI level (for example, the to-be-reported CQI level is 3) when the SINR obtained through calculation is mapped to a CQI. In other words, CQI levels do not match. To resolve the CQI level mismatch case, the terminal device first determines whether the original SINR value obtained through calculation falls within the reduction range. If the SINR value falls within the reduction range, based on a CQI level predefined by the network device, the CQI value to be reported by the terminal device is reduced. For example, if the reduction level configured by the terminal device is 1, the terminal device lowers, for the to-be-reported CQI value, the reduction value obtained through calculation by one level based on the configured reduction level 1, and reports the to-be-reported CQI value.

It should be noted that CQI calculation depends on an SINR value calculated by the terminal device.

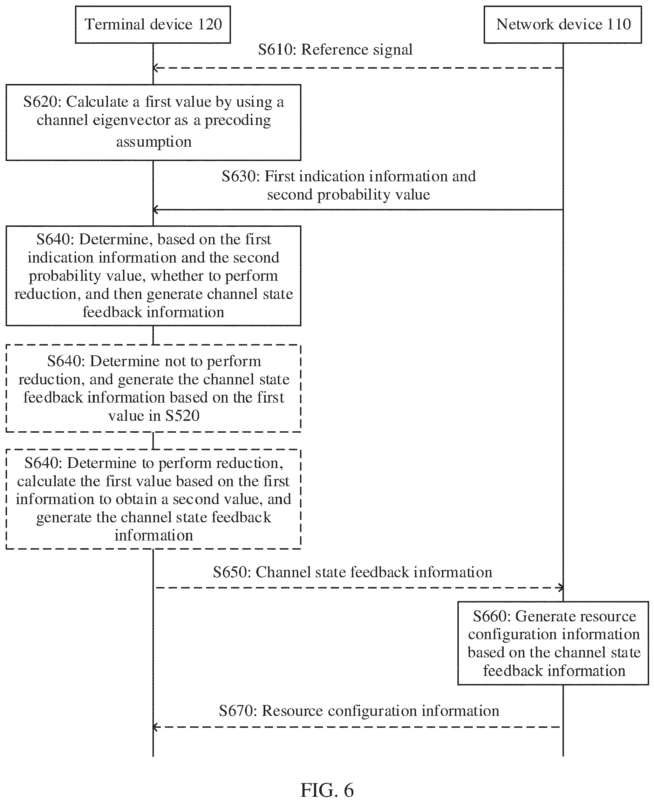

It should be further noted that in embodiments of this application, the first value of the first information may not be reduced. For a specific example, refer to the method shown in FIG. 6 in this application. Details are not described herein.

After the terminal device calculates the second CQI based on the first indication information, the terminal device may generate the channel state feedback information based on the second CQI. The terminal device sends the channel state feedback information to the network device. Optionally, the method procedure shown in FIG. 5 further includes the following step.

S550: The terminal device sends the channel state feedback information to the network device, or the network device receives the channel state feedback information from the terminal device.

After receiving the channel state feedback information, the network device may determine, based on the channel state feedback information, a resource required by the downlink channel. Optionally, the method procedure shown in FIG. 5 further includes the following step.

S560: The network device generates resource configuration information based on the channel state feedback information, or it is interpreted as that the network device determines a resource required by the downlink channel. S560 is the same as S440. For specific descriptions, refer to the descriptions of S440 in FIG. 4. To avoid repetition, details are not described herein again.

Optionally, the method procedure shown in FIG. 5 further includes the following step.

S570: The network device sends the resource configuration information to the terminal device, or the terminal device receives the resource configuration information from the network device.

It should be understood that the resource configuration information may include resource information about an MCS that is to be allocated by the network device to the downlink channel corresponding to the terminal device.

Based on the method described in FIG. 4, a step in which the network device sends the first indication information is added to the method shown in FIG. 5. The terminal device performs reduction calculation on the initially calculated first value of the first information based on the received first indication information. The terminal device generates the channel state feedback information based on the second value obtained through another round of calculation. This improves accuracy of the channel state feedback information determined by the terminal device, and improves a degree of matching between a resource allocated by the network device for the terminal device and a resource required by the terminal device.

It should be noted that when the cosine similarity of the AI model is represented based on the distribution feature, the terminal device may determine a plurality of reduction values. For example, the terminal device may obtain a plurality of cosine similarity values based on samples in cosine similarity distribution of the AI model. In this way, a plurality of reduction values may be calculated according to a predefined formula. The predefined formula may be a square of the cosine similarity or a reduction value calculation formula when the rank > 1. When the terminal device uses different reduction values, probabilities of CQI mismatches are also different. For example, if the reduction value calculated by the terminal device is small, a CQI mismatch may not occur on the network device. When the reduction value calculated by the terminal device is relatively large, a CQI mismatch may occur on the network device.

It should be further noted that to ensure that a resource allocated by the network device based on the channel state feedback information reported by the terminal device can 100% match the terminal device, the terminal device may greatly reduce the first value of the first information, so that the second CQI generated by the terminal is low. In this case, although a low bit error rate of the network device is ensured, a throughput of the terminal device is also low. This application proposes a probability-based flexible mechanism for resolving the problem. Even if a mismatch may occur on a network device side, if a probability of occurrence of such a situation is low, the terminal device may still use a small reduction value, to enable the terminal device to report a CQI level as high as possible.

Specifically, it is assumed that an SINR range between CQI levels is Y dB and a reduction range is X dB. It is considered that distribution of SINRs obtained through calculation is even and equal in probability. In this case, a probability of occurrence of CQI mismatch may be expressed as:

$$P^{backoff} = \frac{X}{Y}$$

It is assumed that in the cosine similarity distribution, when a probability of obtaining specific cosine similarity is *Prho*, a probability of obtaining a corresponding reduction value is also *Prho.* Therefore, in this reduction case, a probability of occurrence of a CQI mismatch on the network device may be expressed as:

$$P^{mismatch} = P^{backoff} \times \mathrm{P}\, rho$$

If CQI mismatch probabilities calculated by the terminal device based on different samples of the cosine similarity are all less than or equal to a threshold specified by the network device, this indicates that the probability of occurrence of a CQI mismatch on the network device is low. Therefore, in this case, the terminal device may map the SINR value obtained through calculation to the CQI, and the terminal device does not reduce the SINR value. Otherwise, a reduction value to be used may be determined based on a sample value of the cosine similarity corresponding to the maximum probability of occurrence of a mismatch, instead of simply selecting the mean of the cosine similarity as the reduction value.

Optionally, the reduction value is determined highly dependent on the AI model, and configuration and updating of the AI model and configuration of the reduction value may not be performed synchronously. For example, as described above, the AI model is transmitted through another higher layer signaling/application layer protocol, and a reduction value configuration is configured in RRC as a CSI reporting configuration. Consequently, the model may be changed, but the back-back value is not changed. Therefore, a default processing manner is required to deal with this situation.

In a possible implementation, the default processing manner may include the following.

Manner 1: A default reduction value of the terminal device is 0, in other words, reduction is not performed.

Manner 2: The terminal device calculates the CQI using a fixed precoding assumption, instead of calculating the CQI based on a channel eigenvector. This can avoid a CQI mismatch.

The two manners are essentially default processing manners for reduction value feedback on a basis that the AI model of the terminal device is changed. There is another processing manner. This is not limited in this application.

According to the channel state feedback method, FIG. 6 shows a schematic flowchart of another channel state feedback method.

In the method shown in FIG. 6, the method may include step S610 to step S650.

S610 and S620 are the same as S510 and S520 in FIG. 5. For brevity, details are not described herein again.

S630: The network device sends first indication information and a second probability value to the terminal device, or the terminal device receives first indication information and a second probability value that are sent by the network device.

In a possible implementation, the network device configures the first indication information for the terminal device through RRC signaling. Configuration content indicates "AIPMI-CQI", and in the field, the first indication information configures a distribution-related parameter about an AI model (for example, cosine similarity of the AI model, and normalized mean square error of the AI model), and the second probability value. The configured information for channel state feedback is used by the terminal device to determine whether a reduction calculation needs to be performed on the second value. For example, the following code may be used for implementation.

```
CSI-ReportConfig ::=              SEQUENCE {
        reportConfigId                      CSI-ReportConfigId,
        reportQuantity                      CHOICE {
            none                                NULL,
            cri-RI-PMI-CQI                      NULL,
            cri-RI-i1                           NULL,
            cri-RI-CQI                          NULL,
            cri-RI-AIPMI-CQI                    SEQUENCE{
Rank1                       RhoDistributionAndThreshold,
Rank2                       RhoDistributionAndThreshold
...}
},
....
}
RhoDistributionAndThreshold ::=       SEQUENCE {
Distribution            ENUMERATED {Gaussian, Exponential, ...}
Mean            ENUMERATED {0.1, 0.2, ...}
Variance            ENUMERATED {0, 0.1, 0.2, ...}
        Threshold                ENUMERATED {0.1, 0.2, ...}
        }
    RhoDistributionAndThreshold ::=       SEQUENCE {
RhoValue                SEQUENCE {
ENUMERATED{0.1, 0.2, ...}
        }
        Threshold                ENUMERATED {0.1, 0.2, ...}
        }
```

When configuring the first indication information, the network device sends the second probability value to the terminal device at the same time. The second probability value may also be a probability value about CQI mismatch tolerance. The AI model cannot restore the original eigenvector with 100% accuracy. Therefore, there is a chance that a CQI calculated by the terminal device is higher than an actual CQI of the channel. In other words, a CQI received by the network device may be a mismatch. The first probability provided by the network device is an upper limit of a probability that this case is allowed to occur.

It should be understood that in a procedure of mapping an SINR value to a CQI, SINR differences between different CQI levels are not exactly the same. Therefore, probabilities of mismatches occurring at different CQI levels are not exactly the same.

The network device sends the first indication information and the second probability value to the terminal device. Correspondingly, the terminal device receives the first indication information and the second probability value that are sent by the network device. Optionally, the method shown in FIG. 6 further includes the following step.

S640: The terminal device determines, based on the received first indication information and the second probability value, whether to perform reduction calculation on the first value. The terminal device further generates the channel state feedback information based on a determining result.

Specifically, to determine whether reduction needs to be performed, the terminal device needs to obtain a plurality of reduction values based on the first indication information, and obtain a plurality of first probability values based on the plurality of reduction values. For ease of understanding, the first probability value may be referred to as a CQI mismatch probability value.

The terminal device compares each of the plurality of CQI mismatch probability values with the second probability value. A quantity of CQI mismatch probability values that are greater than or equal to the second probability value is N.

When N is greater than a first threshold, the terminal device determines to perform reduction. When N is less than the first threshold, the terminal device determines not to perform reduction. Alternatively, when N is equal to the first threshold, the terminal device determines to perform or not to perform reduction.

For example, the first threshold is predefined, the first threshold is sent by the network device to the terminal device, or the first threshold is determined by the terminal device and the network device through negotiation. This is not limited in this application.

For example, the terminal device obtains a plurality of reduction values (for example, 0.36 dB, 0.6 dB, and 0.86 dB shown in table 2) based on the first indication information. As shown in table 2, a plurality of CQI mismatch probability values (for example, 0.12, 0.097, and 0.057 shown in table 2) are obtained based on the plurality of reduction values. When the second probability value received by the terminal device is 0.1, and the first threshold is 1, a quantity N of CQI mismatch probability values (for example, 0.12) that are in the plurality of CQI mismatch probability values and that are greater than the second probability value is 1, and a value of N is equal to the first threshold. The terminal device may determine not to perform reduction, or the terminal device may determine to perform reduction.

For example, the terminal device obtains a plurality of reduction values (for example, 0.36 dB, 0.6 dB, and 0.86 dB shown in table 2) based on the first indication information. As shown in table 2, a plurality of CQI mismatch probability values (for example, 0.12, 0.097, and 0.057 shown in table 2) are obtained based on the plurality of reduction values. When the second probability value received by the terminal device is 0.08, and the first threshold is 1, a quantity N of CQI mismatch probability values (for example, 0.12 and 0.097) that are in the plurality of CQI mismatch probability values and that are greater than the second probability value is 2, and a value of N is greater the first threshold. The terminal device determines to perform reduction.

When a reduction value is a fixed value, a CQI mismatch probability = a probability of falling into a reduction range $\times$ a cumulative probability of samples. For details, refer to the following table.

**Table 2 Example** of mismatch **probability calculation**

| Reduction value | Probability of falling into a reduction range | Cumulative probability of a sample | CQI mismatch probability value |
|---|---|---|---|
| 0.36 dB (rho = 0.92) | 0.24 | 0.5 | 0.12 |
| 0.6 dB (rho = 0.87) | 0.39 | 0.25 | 0.097 |
| 0.86 dB (rho = 0.82) | 0.57 | 0.1 | 0.057 |

Optionally, a reduction value corresponding to a maximum mismatch probability may be selected as the reduction value. For example, if the maximum CQI mismatch probability value is 0.12 as shown in table 2, the terminal device should select 0.36 dB as the reduction value for calculation.

In another implementation, if the network device configures configuration information about probability density distribution of the cosine similarity of the AI model, the terminal device may calculate a reduction value threshold based on a threshold that is configured by the network device and that is used for allowing a mismatch to occur, and an SINR range corresponding to the current CQI level. The terminal device may obtain a lower limit of a square of the cosine similarity based on an inverse operation of a predefined formula, to determine a performance distribution location and a corresponding cumulative probability of the cosine similarity.

For example, if a mismatch threshold configured by the network device is 0.1, and an SINR range corresponding to the current CQI level calculated by the terminal device is 2 dB, a reduction range in reduction indication information delivered by the network device is 0.2 dB. For example, a rank is 1. It can be obtained that the square of the cosine similarity needs to be at least 0.95. Further, the terminal device determines, based on distribution of the cosine similarity, a cumulative probability that a square of the cosine similarity is greater than 0.95.

If the cumulative probability is greater than the second probability value, in other words, the probability that the cosine similarity of the AI model is greater than the lower limit of the cosine similarity and is greater than a specific threshold, reduction is not performed. If the cumulative probability is less than or equal to the second probability value, reduction is performed. Optionally, reduction may be performed when the cumulative probability is greater than or equal to the second probability value.

Based on step 640, the terminal device determines and generates the channel state feedback information, and sends the channel state feedback information to the network device, or the network device receives the channel state feedback information sent by the terminal device.

Specifically, when determining that reduction is not performed on the first value, the terminal device generates the channel state feedback information based on the first value calculated in step 620.

Optionally, when the first value is an SINR value, the SINR value needs to be further mapped to a CQI.

Optionally, when determining, based on step 640, that the first value needs to be reduced, the terminal device reduces the first value calculated in step 620, and then generates the channel state feedback information.

Optionally, after generating the channel state feedback information, the terminal device sends the channel state feedback information to the network device. The method shown in FIG. 6 further includes the following step.

S650: The terminal device sends the channel state feedback information to the network device, or the network device receives the channel state feedback information sent by the terminal device.

For S650 to S670, refer to related descriptions in S550 to S570 in FIG. 5. For brevity, details are not described herein again.

In the method shown in FIG. 6, a required reduction value is further determined with reference to distribution of the AI model information. Moreover, the terminal device determines, based on the second probability value sent by the network device and the first probability value obtained by the terminal device based on the first indication information, whether a reduction calculation needs to be performed on the first value. Compared with the foregoing embodiments, in this embodiment, the terminal device determines whether the first value needs to be reduced. This avoids an error when the terminal device calculates the reduction value based on a single statistical value, and improves accuracy of feedback information.

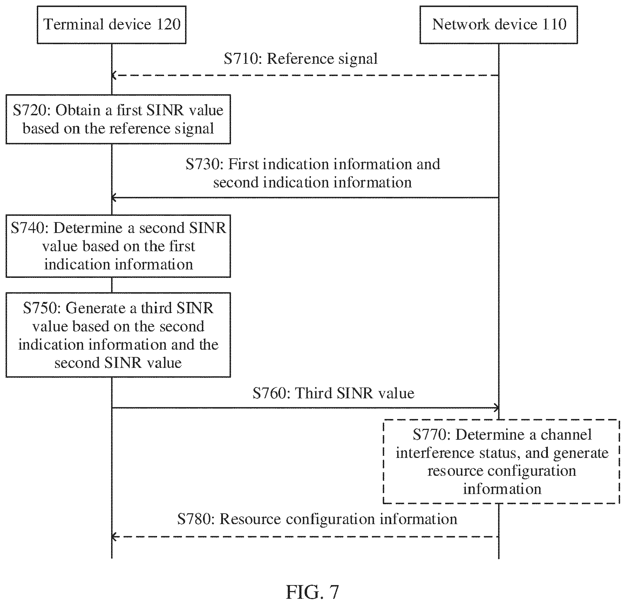

FIG. 7 is a schematic flowchart of a specific example of another channel state feedback method according to this application.

S710 is the same as S510 in FIG. 5. For brevity, details are not described herein again.

S720: The terminal device obtains a channel eigenvector based on the reference signal, and generates a first SINR value.

Optionally, the terminal device obtains the channel eigenvector based on the reference signal, uses an identity matrix as a precoding assumption. The terminal device calculates the first SINR value by using a receiver algorithm of the terminal device and/or a typical receiver algorithm (for example, an MRC algorithm).

Optionally, when the network device sends the reference signal in a beamformed manner, the network device has precoded the to-be-sent reference signal. Therefore, when the terminal device calculates the first SINR by using the identity matrix, it may be considered that for a channel matrix, precoding information has been considered. No additional precoding matrix assumption is required.

Optionally, when the network device sends the reference signal in a non-beamformed manner, the terminal device calculates the first SINR value and uses the channel eigenvector as a precoding assumption. This is the same as S620 in FIG. 6. For brevity, details are not described herein again.

Specifically, the terminal device obtains the channel eigenvector, and calculates the first SINR value by using the receiver algorithm of the terminal device and/or the typical receiver algorithm. If the terminal device obtains an SINR value by using the receiver algorithm of the terminal device, the SINR value obtained by the terminal device is the first SINR value. If the terminal device separately obtains different SINR values by using the receiver algorithm of the terminal device and the typical receiver algorithm, in this case, the terminal device may use an SINR value obtained by using the typical receiver algorithm as an SINR reference value, and sends, to the network device, a difference between the SINR value obtained by using the receiver algorithm of the terminal device and the SINR reference value. In this case, the network device obtains, by using the typical receiver algorithm, the SINR reference value that is the same as that of the terminal device, and analyzes a difference between the SINR reference value and an SINR reported by the terminal device, to obtain channel state information. The terminal device directly sends the SINR value, instead of sending a CQI. This avoids information loss when the terminal device maps the SINR value for generating the CQI. In this way, the network device can determine a channel state more accurately.

Optionally, the typical receiver algorithm may be configured by the network device and sent to the terminal device. Alternatively, the typical receiver algorithm is predefined. Alternatively, the typical receiver algorithm is determined by the terminal device and the network device through negotiation. This is not limited in this application.

S730: The terminal device receives first indication information and second indication information from the network device, or the network device sends first indication information or second indication information to the terminal device.

It should be noted that the first indication information and the second indication information may be sent via one message. For example, the first indication information and the second indication information are carried in one message. Alternatively, first indication information and the second indication information may be sent via different messages. For example, the first indication information is carried in a message # 1, and the second indication information is carried in a message # 2.

S740: A second SINR value determined by the terminal device based on the first indication information is the same as the second value determined in S540 in FIG. 5. For brevity, details are not described again.

S750: The terminal device generates a third SINR value based on the second indication information and the second SINR value.

Specifically, when configuring the first indication information for the terminal device, the network device configures content of the first indication information as "AIPMI-SINR", to indicate that the terminal device reports the PMI by using an AI manner and reports the SINR value. The second indication information configured by the network device includes a quantization manner of the SINR. The following code may be used for implementation.

```
CSI-ReportConfig ::=          SEQUENCE {
    reportConfigId                CSI-ReportConfigId,
    reportQuantity                CHOICE {
        none                          NULL,
        cri-RI-PMI-CQI                NULL,
        cri-RI-i1                     NULL,
        cri-RI-CQI                    NULL,
        cri-RI-AIPMI-SINR             CHOICE{SINR, SINRgap}
    },
    ....
}
```

Optionally, the second indication information sent by the network device indicates a third SINR value directly sent by the terminal device to the network device. The third SINR value may be an SINR value, or may be a difference between the SINR and an SINR reference value. The SINR reference value is obtained by using a plurality of typical receiver algorithms. For example, an SINR value calculated by the terminal device by using the MRC receive algorithm is used as the SINR reference value. When the terminal device sends the SINR reference value, an SINR range is small. Therefore, the SINR is described more accurately with a same overhead.

Optionally, the second indication information sent by the network device includes SINR quantization configuration information. The terminal device quantizes the second SINR value based on the SINR quantization configuration information to obtain a third SINR value, and sends the third SINR value to the network device.

Optionally, the second indication information sent by the network device includes at least one of the following: a quantization range, a quantity of quantization bits, or a quantization step. The quantization range, the quantity of quantization bits, and the quantization step are all SINR quantization configuration information. In this embodiment, examples are separately used to describe quantization manners.

Manner 1: The quantity of quantization bits, the quantization range, and the quantization step are all set as defined in the standard. In this case, the network device does not need to additionally provide a quantization-related configuration in RRC configuration.

Manner 2: The quantity of quantization bits is fixed, and the network device configures, through RRC, the SINR range reported by the terminal device. In this case, a uniform step is used. In this case, the second indication information includes a fixed quantity of quantization bits configured by the network device for the terminal device. Specifically, the terminal device quantizes the SINR value by using the uniform step based on the fixed quantity of quantization bits, to obtain the reported SINR range.

Manner 3: The quantization range is fixed, and the network device configures, through RRC, a quantity of bits used by the terminal device for reporting. In this case, a uniform step is used. In this case, the second indication information includes the fixed SINR value range configured by the network device for the terminal device. Specifically, the terminal device quantizes the SINR value by using the uniform step based on the fixed SINR value range, to obtain a quantity of reported bits.

There is certainly another quantization manner. This is not limited in this application.

The terminal device quantizes the to-be-reported SINR value based on different quantization manners configured by the network device for the terminal device, and then sends the quantized SINR value to the network device.

Optionally, when the second indication information indicates that the terminal device reports an absolute SINR value, the terminal device directly sends the third SINR value obtained by quantizing the second SINR value to the network device.

Optionally, when the second indication information indicates that the SINR value reported by the terminal device is an SINR gap value, the terminal device calculates a difference between the SINR calculated by using the receiver algorithm of the terminal device and the SINR value calculated by using the typical receiver algorithm, and then sends the SINR difference to the network device as the third SINR value.

The terminal device sends the third SINR value to the network device, or the network device receives the third SINR value sent by the terminal device. The method shown in FIG. 7 further includes the following step.

S760: The terminal device sends the third SINR value to the network device, or the network device receives the third SINR value sent by the terminal device. Optionally, the method shown in FIG. 7 further includes the following step.

S770: The network device determines a channel interference status based on the third SINR value sent by the terminal device, and further determines resource configuration information.

Specifically, if the terminal device reports the SINR value to the network device, the network device determines the channel interference status based on the received SINR value with reference to AI-encoded channel information (for example, PMI information). If the terminal device reports the SINR difference to the network device, the network device calculates, based on the SINR value obtained by using the typical receiver algorithm and the SINR difference reported by the terminal device, the SINR value obtained by using the receiver algorithm of the terminal device, to determine the channel interference status. The network device determines information such as an MCS resource allocated to the terminal device with reference to the channel state, the channel interference status, and a precoding status of the network device.

Optionally, after determining the resource configuration information, the network device sends the resource configuration information to the terminal device. The method shown in FIG. 7 further includes the following step.

S780: The network device sends the resource configuration information to the terminal device, or the terminal device receives the resource configuration information sent by the network device.

In the manner shown in FIG. 7, the terminal device reports the SINR, instead of sending a CQI value. The SINR value does not need to be mapped for obtaining a CQI value. Because CQI values are discrete and SINR values are continuous, some information may be lost when an SINR is mapped to a CQI value. In this way, in the method in which the terminal device directly sends a SINR value, the network device is enabled to obtain a more accurate channel interference status. This improves accuracy of the resource configuration information delivered by the network device to the terminal device.

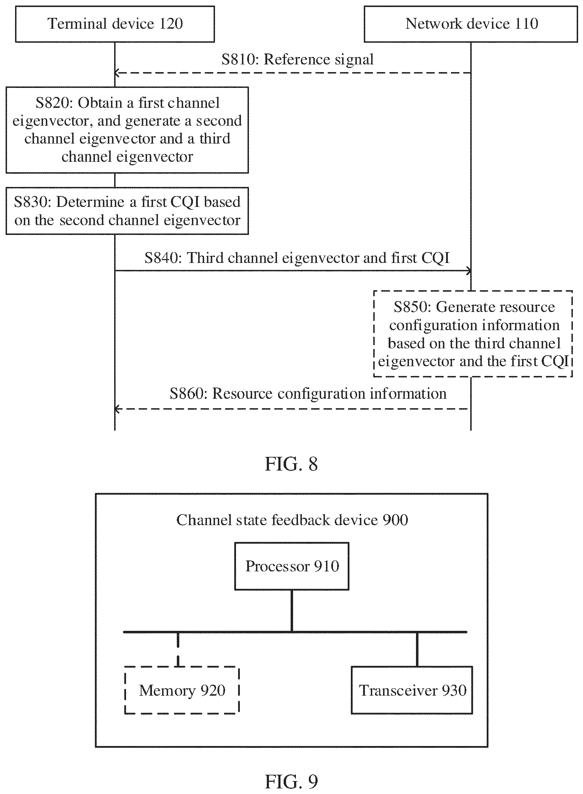

FIG. 8 is a schematic flowchart of another channel state feedback method according to an embodiment.

S810 is the same as S510 in FIG. 5. For brevity, details are not described herein again.

S820: The terminal device determines a first channel eigenvector based on the obtained reference signal. The terminal device encodes the first channel eigenvector to generate a third channel eigenvector, and performs AI-decoding on the third channel eigenvector to generate a second channel eigenvector.

Specifically, the terminal device encodes the first channel eigenvector by using an AI encoder to obtain the third eigenvector. The terminal device decodes the third channel eigenvector by using an AI decoder to generate the second channel eigenvector. The second channel eigenvector is used to calculate a first CQI.

Optionally, the AI encoder and/or the AI decoder may be configured by the network device for the terminal device in advance, or may be obtained by the terminal device.

Optionally, the AI decoder is a low-complexity decoder. The AI decoder is configured to determine a precoding matrix assumption in calculation for the first CQI, so that the network device and the terminal device have a same precoding assumption.

S830: The terminal device generates a first CQI value based on the second channel eigenvector.

Specifically, the terminal device decodes, by using the low-complexity decoder, the third channel eigenvector obtained through encoding, and makes a precoding assumption based on the second channel eigenvector obtained through decoding to generate the first CQI.

S840: The terminal device sends the third channel eigenvector and the first CQI to the network device. Correspondingly, the network device receives the third channel eigenvector and the first CQI that are sent by the terminal device.

The network device receives the third channel eigenvector and the first CQI that are sent by the terminal device, to further determine a channel state and a channel interference status, and generate resource configuration information. The method shown in FIG. 8 further includes the following step.

S850: The network device generates the resource configuration information based on the third channel eigenvector and the first CQI.

Specifically, the network device further decodes the third channel eigenvector sent by the terminal device to obtain a precoding matrix.

Then, the network device decodes the obtained third channel eigenvector and the first CQI by using a low-complexity decoder that is the same as that of the terminal device, to obtain a rough channel eigenvector, and determines a channel interference status based on the rough eigenvector and the first CQI obtained by the network device.

Optionally, the network device further generates and sends the resource configuration information based on the precoding matrix and the determined channel interference status. The method procedure shown in FIG. 8 further includes the following step.

S860: The network device sends the resource configuration information to the terminal device, or the terminal device receives the resource configuration information from the network device.

The resource configuration information includes information about an MCS that is to be allocated by the network device to the downlink channel corresponding to the terminal device.

The first CQI and the third channel eigenvector that are sent by the terminal device to the network device shown in FIG. 8 ensure that the terminal device and the network device have the same precoding assumption. The network device determines a channel interference status more accurately based on the received first CQI and the third channel eigenvector that is obtained through encoding. This resolves a problem that a resource allocated to the terminal device by the network device based on a CQI with a significant error has a low matching degree. The network device and the terminal device maintain the same precoding assumption, so that the network device can obtain an accurate channel interference status. This improves accuracy of the resource configuration information sent by the network device to the terminal device.

Sequence numbers of the foregoing processes do not mean execution sequences in the foregoing method embodiments. The execution sequences of the processes should be determined based on functions and internal logic of the processes, and should not be construed as any limitation on the implementation processes of embodiments of this application. In addition, it is possible that not all operations in the foregoing method embodiments need to be performed.

It should be understood that the terminal device and/or the network device in the foregoing method embodiments may perform some or all of the steps in the embodiments. These steps or operations are merely examples. In embodiments of this application, other operations or variants of the various operations may be further included.

It should be further understood that in various embodiments of this application, unless otherwise specified or logically conflicted, terms and/or descriptions in different embodiments may be consistent and may be referenced by each other. The technical features in different embodiments may be combined to form a new embodiment according to their internal logical relationships.

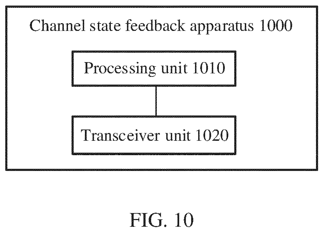

The foregoing describes in detail the channel state feedback method provided in embodiments of this application with reference to FIG. 4 to FIG. 8. The following describes in detail a channel state feedback apparatus provided in embodiments of this application with reference to FIG. 9 and FIG. 10.

The following describes in detail a channel state feedback apparatus provided in embodiments of this application with reference to FIG. 9 and FIG. 10. It should be understood that descriptions of the apparatus embodiments correspond to the descriptions of the method embodiments. Therefore, for content that is not described in detail, refer to the foregoing method embodiments. For brevity, a part of content is not described herein again.

In embodiments of this application, the transmit end device or the receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 9 is a schematic block diagram of an example of an information transmission device 900 according to this application. A channel state feedback device shown in FIG. 9 may be used to implement any device, for example, the terminal device and the network device, in any method in FIG. 4 to FIG. 8.

It should be understood that the information transmission device 900 may be a physical device, may be a component (for example, an integrated circuit or a chip) of the physical device, or may be a functional module in the physical device.

As shown in FIG. 9, the channel state feedback device 900 includes one or more processors 910. Optionally, the processor 910 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the information transmission device 900 may further include a transceiver 930. The transceiver 930 may also be referred to as a transceiver unit, a transceiver, a transceiver circuit, or the like, and is configured to implement a transceiver function.

Optionally, the channel state feedback device 900 may further include a memory 920. A specific deployment location of the memory 920 is not specifically limited in this embodiment of this application. The memory may be integrated into the processor, or may be independent of the processor. When the channel state feedback device 900 does not include a memory, the channel state feedback device 900 only needs to have a processing function, and the memory may be deployed at another location (for example, a cloud system).

The processor 910, the memory 920, and the transceiver 930 communicate with each other through an internal connection path, to transmit a control signal and/or a data signal.

It may be understood that the channel state feedback device 900 may further include another apparatus although not shown, for example, an input apparatus, an output apparatus, or a battery.

Optionally, in some embodiments, the memory 920 may store an execution instruction used to perform the method in embodiments of this application. The processor 910 may execute instructions stored in the memory 920 and complete, in combination with other hardware (for example, the transceiver 930), steps performed in the following method. For a specific working procedure and beneficial effects, refer to the descriptions in the foregoing method embodiment.

The method disclosed in embodiments of this application may be applied to the processor 910, or may be implemented by the processor 910. The processor 910 may be an integrated circuit chip with a signal processing capability. In an implementation process, the steps of the method may be performed through a hardware integrated logic circuit in the processor or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 920 may be a volatile memory or a nonvolatile memory, or may include both a volatile memory and a nonvolatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink-DRAM, SLDRAM), and a direct rambus dynamic random access memory (direct rambus RAM, DR RAM). It should be noted that the memory of the systems and methods described in this specification includes but is not limited to these and any memory of another proper type.

FIG. 10 is a schematic block diagram of a channel state feedback apparatus 1000 according to this application.

Optionally, a specific form of the channel state feedback apparatus 1000 may be a general-purpose computer device or a chip in the general-purpose computer device. This is not limited in embodiments of this application. As shown in FIG. 10, the channel state feedback apparatus includes a processing unit 1010 and a transceiver unit 1020.

Specifically, the channel state feedback apparatus 1000 may be any device related to this application, and may implement functions that can be implemented by the device. It should be understood that the channel state feedback apparatus 1000 may be a physical device, may be a component (for example, an integrated circuit or a chip) of the physical device, or may be a functional module in the physical device.

In a possible design, the channel state feedback apparatus 1000 may be the terminal device (for example, the terminal device 120) in the foregoing method embodiment, or may be a chip configured to implement functions of the terminal device (for example, the terminal device 120) in the foregoing method embodiment.

For example, the transceiver unit is configured to receive first indication information from the network device. The first information includes channel state indicator CQI information or signal to interference plus noise ratio SINR information. The processing unit is configured to reduce a first value of first information to a second value based on first indication information.

Optionally, the transceiver unit is further configured to receive a second probability value from the network device. The processing unit is further configured to determine a first probability value based on the first indication information, and determines to reduce the first value of the first information to the second value based on the first probability value and the second probability value.

It should be further understood that when the channel state feedback apparatus 1000 is a terminal device (for example, the terminal device 120), a communication interface (for example, a transceiver or an input/output interface) may be used to implement the transceiver unit 1020 in the channel state feedback apparatus 1000. At least one processor, corresponding to, for example, the processor 910 shown in FIG. 9, may be used to implement the processing unit 1010 in the channel state feedback apparatus 1000.

Optionally, the channel state feedback apparatus 1000 may further include a storage unit. The storage unit may be configured to store instructions or data. The processing unit may invoke the instructions or data stored in the storage unit, to implement a corresponding operation.

It should be understood that a specific process in which the units perform the foregoing corresponding steps is described in detail in the foregoing method embodiments, and for brevity, details are not described herein.

In another possible design, the channel state feedback apparatus 1000 may be the network device (for example, the network device 110) in the foregoing method embodiment, or may be a chip configured to implement functions of the network device (for example, the network device 110) in the foregoing method embodiment.

For example, the transceiver unit is configured to send first indication information to a terminal device. First information includes channel state indicator CQI information or signal-to-interference-plus-noise ratio SINR information.

It should be further understood that when the channel state feedback apparatus 1000 is the network device 101, a communication interface (for example, a transceiver or an input/output interface), corresponding to, for example, the transceiver 930 shown in FIG. 9, may be used to implement the transceiver unit 1020 in the channel state feedback apparatus 1000. At least one processor, corresponding to, for example, the processor 910 shown in FIG. 9, may be used to implement the processing unit 1010 in the channel state feedback apparatus 1000.

Optionally, the channel state feedback apparatus 1000 may further include a storage unit. The storage unit may be configured to store instructions or data. The processing unit may invoke the instructions or data stored in the storage unit, to implement a corresponding operation.

It should be understood that a specific process in which the units perform the foregoing corresponding steps is described in detail in the foregoing method embodiments, and for brevity, details are not described herein.

It should be understood that a specific process in which the units perform the foregoing corresponding steps is described in detail in the foregoing method embodiments, and for brevity, details are not described herein.

In addition, in this application, the channel state feedback apparatus 1000 is presented in a form of a functional module. The "module" herein may be an application-specific integrated circuit ASIC, a circuit, a processor that executes one or more software or firmware programs and a memory, an integrated logic circuit, and/or another component capable of providing the foregoing functions. In a simple embodiment, a person skilled in the art may figure out that the apparatus 1000 may be in the form shown in FIG. 10. The processor 910 shown in FIG. 9 may be used to implement the processing unit 1010. Optionally, if the computer device shown in FIG. 9 includes the memory 920, the processor 910 and the memory 920 may be used to implement the processing unit 1010. The transceiver 930 shown in FIG. 9 may be used to implement the transceiver unit 1020. The transceiver 930 includes a receiving function and a sending function. Specifically, the processor executes a computer program stored in a memory to implement a function of the processing module. Optionally, when the apparatus 1000 is a chip, a function and/or an implementation procedure of the transceiver unit 1020 may alternatively be implemented by using a pin, a circuit, or the like. Optionally, the memory may be a storage unit in the chip, for example, a register or a cache. The storage unit may alternatively be a storage unit that is in the channel state feedback apparatus and that is located outside the chip, for example, the memory 920 shown in FIG. 9, or may be a storage unit that is deployed in another system or device but not located in the computer device.

Various aspects or features of this application may be implemented as methods, apparatuses, or products using standard programming and/or engineering techniques. For example, a computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a group of instructions. When the computer program or the group of instructions are run on a computer, the computer is enabled to perform the method in any one of embodiments shown in FIG. 4 to FIG. 8.

According to the method provided in embodiments of this application, this application further provides a computer-readable storage medium. The computer-readable medium stores a program or a group of instructions. When the program or the group of instructions are run on a computer, the computer is enabled to perform the method in any one of embodiments shown in FIG. 4 to FIG. 8.

Based on the methods provided in embodiments of this application, this application further provides a communication system. The communication system includes the foregoing apparatus or device.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and according to, for example, a signal having one or more data packets (for example, data from two components interacting with another component in a local system, a distributed system, and/or across a network such as the Internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel state feedback method, comprising:

receiving, by a terminal device, first indication information from a network device; and

reducing, by the terminal device, a first value of first information to a second value based on the first indication information, wherein the second value is used to determine channel state feedback information, and the first information comprises channel state indicator CQI information or signal-to-interference-plus-noise ratio SINR information.

2. The method according to claim 1, wherein the method further comprises:

receiving, by the terminal device, a second probability value from the network device, wherein the second probability value is used to determine whether to reduce the first value of the first information to the second value; and

that the terminal device determines, based on the first indication information, whether to reduce the first value of the first information to the second value comprises:

determining, by the terminal device, a first probability value based on the first indication information; and

determining, by the terminal device based on the first probability value and the second probability value, to reduce the first value of the first information to the second value.

3. The method according to claim 2, wherein the determining, by the terminal device based on the first probability value and the second probability value, to reduce the first value of the first information to the second value comprises: determining, by the terminal device based on the first probability value, the second probability value, and a first threshold, to reduce the first value of the first information to the second value.

4. The method according to any one of claims 1 to 3, wherein the first indication information further comprises at least one of the following information:

a reduction value, cosine similarity of an AI model, and a normalized mean square error of the AI model, wherein the reduction value represents a difference between the first value and the second value, the AI model is used to determine the channel state feedback information, and the cosine similarity of the AI model and the normalized mean square error of the AI model are used to calculate the reduction value.

5. The method according to claim 4, wherein a square of the cosine similarity of the AI model is used to calculate the reduction value.

6. The method according to any one of claims 1 to 5, wherein the first information is the CQI information, the first value is a first CQI value, and the second value is a second CQI value; and

the reducing, by the terminal device, a first value of first information to a second value based on the first indication information comprises:

determining, by the terminal device, the first CQI value based on a first SINR value, wherein the first SINR value is determined based on a channel eigenvector, and the channel eigenvector indicates information about a downlink channel; and

reducing, by the terminal device, the first CQI value of the CQI information to the second CQI value based on the first indication information.

7. The method according to any one of claims 1 to 5, wherein the first information is the SINR information, the first value is a first SINR value, and the second value is a second SINR value;

the reducing, by the terminal device, a first value of first information to a second value based on the first indication information comprises:

reducing, by the terminal device, the first SINR value of the SINR information to the second SINR value based on the first indication information; and

after the reducing, by the terminal device, a first value of first information to a second value based on the first indication information, the method further comprises:

determining, by the terminal device, a second CQI value based on the second SINR value.

8. The method according to any one of claims 1 to 5, wherein the first information is the SINR information, the first value is a first SINR value, and the second value is a second SINR value;

the reducing, by the terminal device, a first value of first information to a second value based on the first indication information comprises:

reducing, by the terminal device, the first SINR value of the SINR information to the second SINR value based on the first indication information; and

after the reducing, by the terminal device, a first value of first information to a second value based on the first indication information, the method further comprises:

quantizing, by the terminal device, the second SINR value based on second indication information to generate a third SINR value, wherein the second indication information is from the network device, and the second indication information indicates a quantization manner of the SINR information; and

determining, by the terminal device, the channel state feedback information based on the third SINR value.

9.  The method according to claim 8, wherein the second indication information further comprises at least one of the following:

a quantity of quantization bits, a quantization range, or a quantization step.

10. The method according to any one of claims 6 to 9, wherein the method further comprises:

receiving, by the terminal device, a channel state information reference signal CSI-RS from the network device; and

determining, by the terminal device, the channel eigenvector based on the CSI-RS.

11. The method according to any one of claims 1 to 10, wherein after the reducing, by the terminal device, a first value of first information to a second value based on the first indication information, the method further comprises:

determining, by the terminal device, the channel state feedback information based on the second value; and

sending, by the terminal device, the channel state feedback information to the network device.

12. The method according to any one of claims 1 to 11, wherein the first indication information is carried in radio resource control RRC configuration information.

13. A channel state feedback method, comprising:

determining, by a network device, first indication information, wherein the first indication information indicates a terminal device to reduce a first value of first information to a second value; and

sending, by the network device, the first indication information to the terminal device, wherein the second value is used to determine channel state feedback information, and the first information comprises channel state indicator CQI information or signal-to-interference-plus-noise ratio SINR information.

14. The method according to claim 13, wherein the method further comprises:

sending, by the network device, a second probability value to the terminal device, wherein the second probability value is used to determine whether to reduce the first value of the first information to the second value.

15. The method according to claim 13 or 14, wherein the first indication information further comprises at least one of the following information:

a reduction value, cosine similarity of an AI model, and a normalized mean square error of the AI model, wherein the reduction value represents a difference between the first value and the second value, the AI model is used to determine the channel state feedback information, and the cosine similarity of the AI model and the normalized mean square error of the AI model are used to calculate the reduction value.

16. The method according to claim 15, wherein a square of the cosine similarity of the AI model is used to calculate the reduction value.

17. The method according to any one of claims 13 to 16, wherein the first information is the CQI information, the first value is a first CQI value, the second value is a second CQI value, the first CQI value is obtained based on a first SINR value, and the second CQI is used to determine the channel state feedback information, wherein

the first SINR value is determined based on a channel eigenvector, and the channel eigenvector indicates information about a downlink channel.

18. The method according to any one of claims 13 to 16, wherein the first information is the SINR information, the first value is a first SINR value, and the second value is a second SINR value; and
that the first indication information indicates a terminal device to reduce a first value of first information to a second value comprises:

the first indication information indicates to reduce the first SINR value of the SINR information to the second SINR value; and
the second SINR value is used to determine a second CQI value, and the second CQI value is used to determine the channel state feedback information.

19. The method according to any one of claims 13 to 16, wherein the first information is the SINR information, the first value is a first SINR value, and the second value is a second SINR value;
that the first indication information indicates a terminal device to reduce a first value of first information to a second value comprises:

the first indication information indicates to reduce the first SINR value of the SINR information to the second SINR value; and
the method further comprises:
sending, by the network device, second indication information to the terminal device, wherein the second indication information indicates a quantization manner of the SINR information.

20. The method according to claim 19, wherein the second indication information further comprises at least one of the following:
a quantity of quantization bits, a quantization range, or a quantization step.

21. The method according to any one of claims 17 to 20, wherein the method further comprises:
sending, by the network device, a channel state information reference signal CSI-RS to the terminal device, wherein the CSI-RS is used to determine the channel eigenvector, and the channel eigenvector indicates the information about the downlink channel.

22. A channel state feedback apparatus, comprising:

a transceiver unit, configured to receive first indication information from a network device, wherein the first indication information indicates to reduce a first value of first information to a second value; and
a processing unit, configured to execute a computer program stored in a memory, to enable the apparatus to perform the method according to any one of claims 1 to 21.

23. A communication apparatus, comprising a processor, wherein the processor is connected to a memory, the memory is configured to store a computer program, and the processor is configured to execute the computer program stored in the memory, to enable the apparatus to perform the method according to any one of claims 1 to 21.

24. A computer-readable storage medium, wherein the computer-readable storage medium stores a computer program or instructions, and when the computer program or the instructions are executed by a processor, the method according to any one of claims 1 to 21 is performed.

25. A computer program product comprising instructions, wherein when the instructions are run on a computer, the method according to any one of claims 1 to 21 is performed.

26. A chip system, comprising a processor, configured to invoke a computer program or instructions from a memory and run the computer program and the instructions, to enable a communication apparatus on which the chip system is installed to implement the method according to any one of claims 1 to 21.

FIG. 1

FIG. 2

FIG. 3

| Terminal device 120 | Network device 110 |

S410: Reference signal

S420: Obtain a channel eigenvector, and use an encoder to perform encoding and quantization to generate channel state feedback information

S430: Channel state feedback information

S440: Decode the channel state feedback information to obtain the channel eigenvector, and generate resource configuration information

S450: Resource configuration information

FIG. 4

Terminal device 120                                    Network device 110

S510: Reference signal

S520: Calculate a first value by using
a channel eigenvector as a precoding
assumption

S530: First indication information

S540: Reduce the first value to a
second value based on the first
indication information, and generate
channel state feedback information
based on the second value

S550: Channel state feedback information

S560: Generate resource configuration
information based on the channel state
feedback information

S570: Resource configuration information

FIG. 5

| Terminal device 120 | | Network device 110 |

S610: Reference signal

S620: Calculate a first value by using a channel eigenvector as a precoding assumption

S630: First indication information and second probability value

S640: Determine, based on the first indication information and the second probability value, whether to perform reduction, and then generate channel state feedback information

S640: Determine not to perform reduction, and generate the channel state feedback information based on the first value in S520

S640: Determine to perform reduction, calculate the first value based on the first information to obtain a second value, and generate the channel state feedback information

S650: Channel state feedback information

S660: Generate resource configuration information based on the channel state feedback information

S670: Resource configuration information

FIG. 6

| Terminal device 120 | | Network device 110 |
|---|---|---|

S710: Reference signal

S720: Obtain a first SINR value
based on the reference signal

S730: First indication information and
second indication information

S740: Determine a second SINR
value based on the first
indication information

S750: Generate a third SINR
value based on the second
indication information and the
second SINR value

S760: Third SINR value

S770: Determine a channel
interference status, and generate
resource configuration
information

S780: Resource configuration information

FIG. 7

Terminal device 120

Network device 110

S810: Reference signal

S820: Obtain a first channel eigenvector, and generate a second channel eigenvector and a third channel eigenvector

S830: Determine a first CQI based on the second channel eigenvector

S840: Third channel eigenvector and first CQI

S850: Generate resource configuration information based on the third channel eigenvector and the first CQI

S860: Resource configuration information

FIG. 8

Channel state feedback device 900

Processor 910

Memory 920

Transceiver 930

FIG. 9

Channel state feedback apparatus 1000

Processing unit 1010

Transceiver unit 1020

FIG. 10

## INTERNATIONAL SEARCH REPORT

International application No.

**PCT/CN2022/122154**

**A. CLASSIFICATION OF SUBJECT MATTER**

H04W 24/10(2009.01)i; H04L 1/00(2006.01)i

According to International Patent Classification (IPC) or to both national classification and IPC

**B. FIELDS SEARCHED**

Minimum documentation searched (classification system followed by classification symbols)

H04W 24/-; H04L 1/-

Documentation searched other than minimum documentation to the extent that such documents are included in the fields searched

Electronic data base consulted during the international search (name of data base and, where practicable, search terms used)

CNABS; CNTXT; CNKI: CSI, 报告, 测量, 反馈, CQI, SINR, 回退, 差, 等级, AI模型; VEN; WOTXT; EPTXT; USTXT; 3GPP: CSI, report?, feedback, PMI, RI, CQI, SINR, backoff, MCS, probability, AI, model?, UE, gNB, network

**C. DOCUMENTS CONSIDERED TO BE RELEVANT**

| Category* | Citation of document, with indication, where appropriate, of the relevant passages | Relevant to claim No. |
|---|---|---|
| X | ERICSSON. "R1-2102745 "CSI Feedback Enhancements for IIoT/URLLC"" *3GPP TSG-RAN WG1 Meeting #104-bis-e,* 07 April 2021 (2021-04-07), sections 1-2 | 1-26 |
| X | ERICSSON. "R1-2104218 "CSI Feedback Enhancements for IIoT/URLLC"" *3GPP TSG-RAN WG1 Meeting #105,* 12 May 2021 (2021-05-12), sections 1-2 | 1-26 |
| A | CN 112312464 A (HUAWEI TECHNOLOGIES CO., LTD.) 02 February 2021 (2021-02-02) entire document | 1-26 |
| A | CN 112243246 A (CHENGDU HUAWEI TECHNOLOGIES CO., LTD.) 19 January 2021 (2021-01-19) entire document | 1-26 |
| A | CN 111277360 A (VIVO COMMUNICATION TECHNOLOGY CO., LTD.) 12 June 2020 (2020-06-12) entire document | 1-26 |
| A | CN 112398518 A (DATANG MOBILE COMMUNICATIONS EQUIPMENT CO., LTD.) 23 February 2021 (2021-02-23) entire document | 1-26 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 December 2022** | **29 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/122154**

| Patent document cited in search report | | | Publication date (day/month/year) | Patent family member(s) | | | Publication date (day/month/year) |
|---|---|---|---|---|---|---|---|
| CN | 112312464 | A | 02 February 2021 | None | | | |
| CN | 112243246 | A | 19 January 2021 | CN | 112243246 | B | 29 April 2022 |
| | | | | WO | 2021008353 | A1 | 21 January 2021 |
| | | | | EP | 3979689 | A1 | 06 April 2022 |
| | | | | US | 2022140887 | A1 | 05 May 2022 |
| CN | 111277360 | A | 12 June 2020 | None | | | |
| CN | 112398518 | A | 23 February 2021 | CN | 112398518 | B | 10 June 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111257784

- CN 202111518890